(19)

Europäisches
Patentamt
European
Patent Office
Office européen
des brevets

(11) **EP 1 987 089 B1**

(12) **EUROPEAN PATENT SPECIFICATION**

(45) Date of publication and mention
of the grant of the patent:
**22.07.2015 Bulletin 2015/30**

(21) Application number: **06734741.9**

(22) Date of filing: **10.02.2006**

(51) Int Cl.:
***C08K 3/10*** (2006.01)

(86) International application number:
**PCT/US2006/004725**

(87) International publication number:
**WO 2007/092018 (16.08.2007 Gazette 2007/33)**

(54) **ENHANCED PROPERTY METAL POLYMER COMPOSITE**

METALL-POLYMER-VERBUND MIT VERBESSERTEN EIGENSCHAFTEN

COMPOSITE METAL POLYMERE PRESENTANT DES PROPRIETES AMELIOREES

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**05.11.2008 Bulletin 2008/45**

(73) Proprietor: **Tundra Composites, LLC
White Bear Lake, MN 55110-5249 (US)**

(72) Inventor: **HEIKKILA, Kurt, E.
Marine On The St.Cr, Minnesota 55047 (US)**

(74) Representative: **Naylor, Matthew John et al
Mewburn Ellis LLP
City Tower
40 Basinghall Street
London EC2V 5DE (GB)**

(56) References cited:
**WO-A2-2005/049714      JP-A- 11 172 162
US-A- 3 619 456        US-A- 3 894 169
US-A- 4 169 185        US-A- 4 793 616
US-A- 5 237 930        US-A- 5 286 802
US-A- 5 342 573        US-A- 6 048 379
US-A1- 2002 153 144    US-A1- 2002 195 257
US-A1- 2003 161 751    US-B1- 6 364 422**

**Description**

This application is being filed as a PCT International Patent Application on 10 February 2006, in the name of Wild River Consulting Group, LLC., a U.S. national corporation, applicant for the designation of all countries except the U.S. and Kurt E. Heikkila, a U.S. citizen, applicant for the designation of the U.S. only.

**Field of the Invention**

The invention relates to metal polymer composites with enhanced properties. The novel properties are enhanced in the composite by novel interactions of the components. The metal polymer composite materials are not simple admixtures, but obtain superior mechanical, electrical and other properties from a unique combination of divided metal, such as a metal particulate, and polymer material that optimizes the composite structure and characteristics through blending the combined polymer and metal materials to achieve true composite properties.

**Background of the Invention**

Substantial attention has been paid to the creation of composite materials with unique properties. Included in this class of materials is a high-density material with improved properties. As an example, lead has been commonly used in applications requiring a high-density material. Applications of high-density materials include shotgun pellets, other ballistic projectiles, fishing lures, fishing weights, wheel weights, and other high-density applications. Lead has also been used in applications requiring properties other than density including in radiation shielding because of its resistance to $\alpha$, $\beta$ and $\gamma$ radiation, EMI and malleability characteristics. Press-on fishing weights made of lead allow the user to easily pinch the weight onto a fishing line without tools or great difficulty. In the case of shotgun pellets, or other ballistic projectiles, lead offers the required density, penetrating force and malleability to achieve great accuracy and minimum gun barrel wear. Lead has been a primary choice for both hunting and military applications. Lead has well known toxic drawbacks in pellet and projectile end uses. Many jurisdictions in the United States and elsewhere have seriously considered bans on the sale and use of lead shot and lead sinkers due to increasing concentrations of lead in lakes and resulting mortality in natural populations. Depleted uranium, also used in projectiles, has workability, toxicity and radiation problems.

Composite materials have been made for many years by combining generally two dissimilar materials to obtain beneficial properties from both. A true composite is unique because the interaction of the materials provides the best properties of both components. Many types of composite materials are known and are not simple admixtures. Generally, the art recognizes that combining metals of certain types and at proportions that form an alloy provides unique properties in metal/metal alloy materials. Metal/ceramic composites have been made typically involving combining metal powder or fiber with clay materials that can be sintered into a metal/ceramic composite.

Combining typically a thermoplastic or thermoset polymer phase with a reinforcing powder or fiber produces a range of filled materials and, under the correct conditions, can form a true polymer composite. A filled polymer, with the additive as filler, cannot display composite properties. A filler material typically is comprised of inorganic materials that act as either pigments or extenders for the polymer systems. A vast variety of fiber-reinforced composites have been made typically to obtain fiber reinforcement properties to improve the mechanical properties of the polymer in a unique composite.

One subset of filled polymer materials is metal polymer admixtures in which a metallic material, a metal particulate or fiber is dispersed in a polymer. The vast majority of these materials are admixtures and are not true composites. Admixtures are typically easily separable into the constituent parts and display the properties of the components. A true composite resists separation and displays enhanced properties of the input materials. A true composite does not display the properties of the individual components. Tarlow, U.S. Patent No. 3,895,143, teaches a sheet material comprising an elastomer latex that includes dispersed inorganic fibers and metallic particles. Bruner et al., U.S. Patent No. 2,748,099, teach a nylon material containing copper, aluminum or graphite for the purpose of modifying the thermal or electrical properties of the material, but not the density of the admixture. Sandbank, U.S. Patent No. 5,548,125, teaches a clothing article comprising a flexible polymer with a relatively small volume percent of tungsten for the purpose of obtaining radiation shielding. Belanger et al., U.S. Patent No. 5,237,930, disclose practice ammunition containing copper powder and a thermoplastic, typically a nylon material. Epson Corporation, JP 63-273664 A shows a polyamide containing metal silicate glass fiber, tight knit whiskers and other materials as a metal containing composite. Lastly, Bray et al., U.S. Patent Nos. 6,048,379 and 6,517,774, disclose an attempt to produce tungsten polymer materials. The patent disclosures combine a polymer and a tungsten powder having a particle size less than 10 microns and optionally a second bi-modal polymer or a metal fiber in a composite for the purpose of making a high-density material.

While a substantial amount of work has been done regarding composite materials generally, metal composite materials have not been obtained having a density substantially greater than 10 gms-cm$^{-3}$, where density is a single measurement to illustrate the composite property. Increasing the density of these materials introduces unique mechanical properties into the composite and, when used, obtains properties that are not present in the lower density composite materials. A need exists for material that has high density, low toxicity, and improved properties in terms of electrical/magnetic properties, malleability, injection molding capability, and viscoelastic properties.

**Brief Description of the Invention**

The invention relates to a metal polymer composite material having improved properties with respect to prior art materials. The material of the invention, through a selection of metal particle size distribution, polymer and processing conditions, attains improved density or other properties through minimization of the polymer filled excluded volume of the composite. The resulting composite materials exceed the prior art composites in terms of density, reduced toxicity, improved malleability, improved ductility, improved viscoelastic properties (such as tensile modulus, storage modulus, elastic-plastic deformation and others) electrical/magnetic properties, and machine molding properties. We have found that density and polymer viscoelasticity measured as elongation are useful properties and useful predictive parameters of a true composite in this technology. In the production of useful enhanced properties, the packing of the selected particle size and distribution and the selection of the particulate or mixed metal particulate, will obtain the enhanced properties. As such density can be used as a predictor of the other useful property enhancement. The use of compositions further comprising an interfacial modifier demonstrates improved utilization of material properties and improved performance, such as elongation and other properties. Preferred composites can be combined with one or more polymers of a given molecular weight distribution and one or more metal particulates with a given distribution to obtain unique composites. The materials can exceed the prior art composites in terms of density, reduced toxicity, improved malleability, improved ductility, improved viscoelastic properties and machine molding properties. We have produced true composites and can obtain viscoelastic properties. We have produced a composite by using an interfacial modifier to improve the association of the particulate with the polymer. We have found that the composite materials of the invention can have a designed level of density, mechanical properties, or electrical/magnetic properties from careful composition blending. The novel viscoelastic properties make the materials useful in a variety of uses not filled by composites and provides a material easily made and formed into useful shapes.

In one embodiment of the invention a selected metal particulate having a specified particle size and size distribution is selected with a polymer with a molecular weight distribution to form an improved composite. Such particles can have a defined circularity that promotes maximum property development. In this system a metal particulate and fluoropolymer composite achieves the stated properties.

In another embodiment, an interfacial modifier is used to ensure that the proportions of metal particulate and polymer obtain the minimum excluded volume filled with polymer, the highest particulate packing densities, the maximize polymer composite material properties and obtain the maximum utilization of materials. The high-density materials of the invention can contain pigments or other ingredients to modify the visual appearance of the materials. Mixed metal particulate, bimetallic (e.g. WC) or alloy metal composites can be used to tailor properties for specific uses. These properties include but are not limited to density, thermal properties such as conductivity, magnetic properties, electrical properties such as conductivity, color, etc. These materials and combination of materials can be used as solid-state electrochemical (e.g. battery) and semiconductor structures. Preferred higher density metal polymer materials can also be combined with one or more polymers and one or more metal particulate to obtain unique composites. A secondary metal can be combined with a metal of high density. A composite can comprise a variety of different combinations of metals and polymers. The metal particulate can contain two metal particulates of different metals, each metal having a relatively high density. In another embodiment, the metal particulate can comprise a metal particulate of high density and a secondary metal. Other useful metals of this disclosure relates to a metal that, by itself, cannot achieve a density greater than 10 in the composite material, but can provide useful properties to the composite as a whole. Such properties can include electrical properties, magnetic properties, physical properties, including heat conductivity, acoustical shielding, etc. Examples of such secondary metals include, but not limited to, iron, copper, nickel, cobalt, bismuth, tin, cadmium and zinc. The materials of the invention permit the design engineers the flexibility to tailor the composite to end-uses and avoid the use of toxic or radioactive materials unless desired. Lead or depleted uranium are no longer needed in their typical applications now that the dense composites of the invention are available. In other applications where some tailored level of toxicity or radiation is needed, the composites of the invention can be used successfully with desired properties engineered into the material.

Briefly, using the technology of the invention, the metal polymer composites of the invention can provide enhanced polymer composite properties. One important material comprises a composite having a density greater than 10 gm-cm$^{-3}$ or higher, typically greater than 11.7 gm-cm$^{-3}$, greater than 12.5 gm-cm$^{-3}$ or greater than 16.0 gm-cm$^{-3}$. The composite comprises a high-density metal particulate, a polymer, and optionally an interfacial modifier material. The compositions of the invention can also contain other additives such as a visual indicator, fluorescent marker, dye or pigment at an amount of at least about 0.01 to 5 wt%. The composites of the invention comprise about 85 to 99.5 wt.-

% metal, 47 to 90 volume-% metal, 0.5 to 15 wt.% polymer, 10 to 53 volume-% polymer in the composite. In this disclosure, we rely on density as one important property that can be tailored in the composite but other useful properties can be designed into the composite.

Enhanced density metal polymer composites can be made by forming a composite in which the metal particulate is obtained at the highest possible packing or tap density of the particulate and with a polymer phase that substantially completely occupies only the minimized excluded volume of the particulate. Using a metal particulate, packing the particulate and combining the particulate with just sufficient polymer such that only the excluded volume of the particulate is filled can optimize the high density of the composite material. A metal is selected having an absolute density of metal greater than about 13 often greater than 16 gm-cm$^{-3}$ that is combined with a polymer selected for composite formation and increased density. As the metal particulate and the polymer component increase in density, the composite material increases in density. The ultimate composite density is largely controlled by efficiency in packing of the metal particulate in the composite and the associated efficiency in filling the unoccupied voids in the densely packed particulate with high density polymer material. We have found that the packing and filling efficiency can be improved by a careful selection of particle shape, size and size distribution. The particulate should be greater than 10 microns (a particle size greater than about 10 microns means that a small portion of the particulate is less than 10 microns, in fact, less than 10 wt.-% often less than 5 wt.% of the particulate is less than 10 microns). The size distribution of the metal should be broad and typically include particles about 10 to 1000 microns. The particulate distribution should contain at least some particulate (at least 5 wt.-%) in the range of about 10 to 70 microns, the particulate should also contain at least some particulate (at least 5 wt.-%) in the range greater than 70, about 70 to 250 microns, optionally the particulate can contain some particulate (at least 5 wt.-%) in the range of about 250 to 500 microns and can contain some particulate in the 500+ micron range. This distribution can be normal, Gaussian, log normal or skew normal but must include the desired range of particle sizes. A true composite is obtained by carefully processing the combined polymer and polymer particulate until properties are developed and density reaches a level showing that using an interfacial modifier to promote composite formation results in enhanced property development and high density.

A composite is more than a simple admixture. A composite is defined as a combination of two or more substances intermingled with various percentages of composition, in which each component retains its essential original properties. It is a controlled combination of separate materials, resulting in properties that are superior to those of its constituents. In a simple admixture the mixed material have little interaction and little property enhancement. One of the materials is chosen to increase stiffness, strength or density. Atoms and molecules can form bonds with other atoms or molecules using a number of mechanisms. Such bonding can occur between the electron cloud of an atom or molecular surfaces including molecular-molecular interactions, atom-molecular interactions and atom-atom interactions. Each bonding mechanism involves characteristic forces and dimensions between the atomic centers even in molecular interactions. The important aspect of such bonding force is strength, the variation of bonding strength over distance and directionality. The major forces in such bonding include ionic bonding, covalent bonding and the van der Waals' (VDW) types of bonding. Ionic radii and bonding occur in ionic species such as Na$^+$Cr, Li$^+$F$^-$. Such ionic species form ionic bonds between the atomic centers. Such bonding is substantial, often substantially greater than 100 kJ-mol$^{-1}$ often greater than 250 kJ-mol$^{-1}$. Further, the interatomic distance for ionic radii tend to be small and on the order of 1-3 A. Covalent bonding results from the overlap of electron clouds surrounding atoms forming a direct covalent bond between atomic centers. The covalent bond strengths are substantial, are roughly equivalent to ionic bonding and tend to have somewhat smaller interatomic distances.

The varied types of van der Waals' forces are different than covalent and ionic bonding. These van der Waals' forces tend to be forces between molecules, not between atomic centers. The van der Waals' forces are typically divided into three types of forces including dipole-dipole forces, dispersion forces and hydrogen bonding. Dipole-dipole forces are a van der Waals' force arising from temporary or permanent variations in the amount or distribution of charge on a molecule.

Summary of Chemical Forces and Interactions

| Type of Interaction | Strength | Bond Nature | Strength Proportional to: |
|---|---|---|---|
| Covalent bond | Very strong | Comparatively long range | $r^{-1}$ |
| Ionic bond | Very strong | Comparatively long range | $r^{-1}$ |
| Ion-dipole | Strong | Short range | $r^{-2}$ |
| VDW Dipole-dipole | Moderately strong | Short range | $r^{-3}$ |
| VDW Ion-induced dipole | Weak | Very short range | $r^{-4}$ |
| VDW Dipole-induced dipole | Very weak | Extremely short range | $r^{-6}$ |

(continued)

| Type of Interaction | Strength | Bond Nature | Strength Proportional to: |
|---|---|---|---|
| VDW London dispersion forces | Very weak[a] | Extremely short range | $r^{-6}$ |
| [a] Since VDW London forces increase with increasing size and there is no limit to the size of molecules, these forces can become rather large. In general, however, they are very weak. | | | |

Dipole structures arise by the separation of charges on a molecule creating a generally or partially positive and a generally or partially negative opposite end. The forces arise from electrostatic interaction between the molecule negative and positive regions. Hydrogen bonding is a dipole-dipole interaction between a hydrogen atom and an electronegative region in a molecule, typically comprising an oxygen, fluorine, nitrogen or other relatively electronegative (compared to H) site. These atoms attain a dipole negative charge attracting a dipole-dipole interaction with a hydrogen atom having a positive charge. Dispersion force is the van der Waals' force existing between substantially non-polar uncharged molecules. While this force occurs in non-polar molecules, the force arises from the movement of electrons within the molecule. Because of the rapidity of motion within the electron cloud, the non-polar molecule attains a small but meaningful instantaneous charge as electron movement causes a temporary change in the polarization of the molecule. These minor fluctuations in charge result in the dispersion portion of the van der Waals' force.

Such VDW forces, because of the nature of the dipole or the fluctuating polarization of the molecule, tend to be low in bond strength, typically 50 kJ mol$^{-1}$ or less. Further, the range at which the force becomes attractive is also substantially greater than ionic or covalent bonding and tends to be about 3-10 Å.

In the van der Waals composite materials of this invention, we have found that the unique combination of metal particles, the varying particle size of the metal component, the modification of the interaction between the particulate and the polymer, result in the creation of a unique van der Waals' bonding. The van der Waals' forces arise between metal atoms/crystals in the particulate and are created by the combination of particle size, polymer and interfacial modifiers in the metal/polymer composite. In the past, materials that are characterized as "composite" have merely comprised a polymer filled with particulate with little or no van der Waals' interaction between the particulate filler material. In the invention, the interaction between the selection of particle size distribution and interfacially modified polymer enables the particulate to achieve an intermolecular distance that creates a substantial van der Waals' bond strength. The prior art materials having little viscoelastic properties, do not achieve a true composite structure. This leads us to conclude that this intermolecular distance is not attained in the prior art. In the discussion above, the term "molecule" can be used to relate to a particle of metal, a particle comprising metal crystal or an amorphous metal aggregate, other molecular or atomic units or sub-units of metal or metal mixtures. In the composites of the invention, the van der Waals' forces occur between collections of metal atoms that act as "molecules" in the form of crystals or other metal atom aggregates. The composite of the invention is characterized by a composite having intermolecular forces between metal particulates that are in the range of van der Waals' strength, i.e., between about 5 and about 30 kJ-mol$^{-1}$ and a bond dimension of 3-10 Å. The metal particulate in the composite of the invention has a range of particle sizes such that about at least 5 wt.-% of particulate in the range of about 10 to 70 microns and about at least 5 wt.% of particulate in the range of about 70 to 250 microns, and a polymer, the composite having a van der Waals' dispersion bond strength between molecules in adjacent particles of less than about 4 kJ-mol$^{-1}$ and a bond dimension of 1.4 to 1.9 Å or less than about 2 kJ-mol$^{-1}$ and the van der Waals' bond dimension is about 1.5 to 1.8 Å.

In a composite, the reinforcement is usually much stronger and stiffer than the matrix, and gives the composite its good properties. The matrix holds the reinforcements in an orderly high-density pattern. Because the reinforcements are usually discontinuous, the matrix also helps to transfer load among the reinforcements. Processing can aid in the mixing and filling of the reinforcement metal. To aid in the mixture, an interfacial modifier can help to overcome the forces that prevent the matrix from forming a substantially continuous phase of the composite. The composite properties arise from the intimate association obtained by use of careful processing and manufacture. We believe an interfacial modifier is an organic material that provides an exterior coating on the particulate promoting the close association of polymer and particulate. Minimal amounts of the modifier can be used including about 0.005 to 3 wt.-%, or about 0.02 to 2 wt.%.

For the purpose of this disclosure, the term "metal," relates to metal in an oxidation state, approximately 0, with up to 25 wt.-% or about 0.001 to 10 wt.-% as an oxide or a metal or non-metal contaminant, not in association with ionic, covalent or chelating (complexing) agents. For the purpose of this disclosure, the term "particulate" typically refers to a material made into a product having a particle size greater than 10 microns and having a particle size distribution containing at least some particulate in the size range of 10 to 100 microns and 100 to 4000 microns. In a packed state, this particulate has an excluded volume of about 13 to 61 vol.-% or about 40 to 60 vol.-%. In this invention, the particulate can comprise two three or more particulates sources, in a blend of metals of differing chemical and physical nature.

Typically, the composite materials of the invention are manufactured using melt processing and are also utilized in product formation using melt processing. Typically, in the manufacturing of the high density materials of the invention, about 40 to 96 vol.% often 50 to 95 vol.-% or 80 to 95 vol.-% of a metal particulate is combined under conditions of heat and temperature with about 4 to 60 vol.-%, often 5 to 50 vol.% or 5 to 20 vol.% of a typical thermoplastic polymer material, are processed until the material attains a density greater than 10 gm-cm$^{-3}$, 11 gm-cm$^{-3}$ preferably greater than 12 gm-cm$^{-3}$, more preferably greater than 16 gm-cm$^{-3}$ indicating true composite formation. Typical elongation is at least 5%, at least about 10% and often between 5 and 250%. Alternatively, in the manufacture of the material, the metal or the thermoplastic polymer can be blended with interfacial modification agents and the modified materials can then be melt processed into the material. Once the material attains a sufficient density, the material can be extruded into a product or into a raw material in the form of a pellet, chip, wafer or other easily processed material using conventional processing techniques. In the manufacture of useful products with the composites of the invention, the manufactured composite can be obtained in appropriate amounts, subjected to heat and pressure, typically in extruder equipment and then formed into an appropriate shape having the correct amount of materials in the appropriate physical configuration. In the appropriate product design, during composite manufacture or during product manufacture, a pigment or other dye material can be added to the processing equipment. One advantage of this material is that an inorganic dye or pigment can be co-processed resulting in a material that needs no exterior painting or coating to obtain an attractive or decorative appearance. The pigments can be included in the polymer blend, can be uniformly distributed throughout the material and can result in a surface that cannot chip, scar or lose its decorative appearance. One particularly important pigment material comprises titanium dioxide (TiO$_2$). This material is extremely non-toxic, is a bright white particulate that can be easily combined with either metal particulates and/or polymer composites to enhance the density of the composite material and to provide a white hue to the ultimate composite material.

We have further found that a blend of two three or more metals in particulate form can, obtain important composite properties from both metals in a polymer composite structure. For example, a tungsten composite or other high density metal particulate can be blended with a second metal particulate that provides to the relatively stable, non-toxic tungsten material, additional properties including a low degree of radiation in the form of alpha, beta or gamma particles, a low degree of desired cytotoxicity, a change in appearance or other beneficial properties. One advantage of a bimetallic composite is obtained by careful selection of proportions resulting in a tailored density for a particular end use. For example, a tantalum/tungsten composite can be produced having a theoretical density, for example, with a fluoropolymer or fluoropolymer that can range from 11 gm-cm$^{-3}$ through 12.2 gm-cm$^{-3}$. Alternatively, for other applications, a iridium tungsten composite can be manufactured that, with a fluoropolymer, can have a density that ranges from about 12 gm-cm$^{-3}$ to about 13.2 gm-cm$^{-3}$. Such composites each can have unique or special properties. These composite processes and materials have the unique capacity and property that the composite acts as an alloy composite of two different metals that could not, due to melting point and other processing difficulties, be made into an alloy form without the methods of the invention.

## Brief Description of the Drawings

Figure 1 is a molded or extruded article made from the material of the invention. The figure is an example of a structure that can be made using the various methods described herein. The stent is an example of an article with a flexible structure that obtains utility from the metal polymer composite of the invention.

Figure 2A and 2B are cross sections of an extrusion product of the invention.

Figure 3A and 3B are two aspects of a fishing jig comprising a snap on or molded sinker of the composite of the invention.

Figure 4A and 4B are two aspects of a pneumatic tire, car or truck wheel weight of the invention.

Figures 5-11 show data demonstrating the viscoelastic properties of the invention and the adaptability of the technology to form desired properties in the materials.

## Detailed Description of the Invention

The invention relates to an improved metal polymer composite material having enhanced or improved properties with respect to prior art materials. Single metal and mixed metal composites can be tailored for novel properties including density, color, magnetism, thermal conductivity, electrical conductivity and other physical properties. The use of compositions further comprising an interfacial modifier demonstrates improved utilization of material properties and improved performance. Preferred composites can be combined with one or more polymers of a given molecular weight distribution and one or more metal particulates with a given distribution to obtain unique composites. The invention relates to a family of composite materials having characteristics that exceed the density and malleability of lead but do not have the inherent toxicity of lead and other high-density materials. The materials can be used in applications requiring high-density, malleability, ductility, formability, and viscoelastic properties. The invention specifically provides high-density materials comprising a high-density metal particulate such as tungsten, a polymer phase and, optionally, an interfacial modifier that permits the polymer and metal particulate to interact to form a composite with desired nature and degree of properties and to attain the maximum density possible. Such materials obtain physical properties in excess of prior art materials including density, storage modulus, color, magnetism, thermal conductivity, electrical conductivity and other physical property improvements without toxicity or residual radiation characteristic of lead or depleted uranium, respectively unless needed in a specific application. The materials of the invention permit the design engineers the flexibility to tailor the composite to end-uses and avoid the use of toxic or radioactive materials unless desired. Lead or depleted uranium are no longer needed in their typical applications.

The composite materials of the invention combine a metal particulate at a maximum tap density leaving a excluded volume and a polymer material substantially occupying the excluded volume, but no more to obtain the highest possible density from the composite composition. Tap density (ASTM B527-93) relates to how well the material is packed. Packing affects the excluded volume and a volume component that is included in the density calculation. A variety of metal particulates in the correct size and distribution can be used. The important parameters of the metal particle distribution include the fact that no more than 5 wt.-% of the metal particulate is less than 10 microns in diameter. Further, the metal particle distribution has a substantial proportion of particulate falling in the range of 10 to 100 microns, a substantial proportion of a particulate falling in the range of 100 to 250 microns and a substantial proportion of a particulate falling in the range of 100 to 500 microns. By a substantial proportion, we mean at least 10 wt.% of the particulate. This distribution can be normal, Gaussian, log normal or skew normal but must include the desired range of particle sizes.

An ultimate density of the metal is at least 11 gm-cm$^{-3}$, preferably greater than 13 gm-cm$^{-3}$, more preferably greater than 16 gm-cm$^{-3}$ and the polymer has a density of at least 0.94 gm-cm$^{-3}$, however, polymers having a density of greater than 1 to 1.4 gm-cm$^{-3}$ and preferably greater than 1.6 gm-cm$^{-3}$ are useful to increase density, also to obtain useful polymer composite materials. The tensile strength is 0.2 to 60 MPa and the storage modulus of the composite (G') ranges from about 1380 to about 14000 MPa, preferably from about 3450 to about 6000 MPa and a tensile modulus of at least 0.2 to 200 MPa. One important characteristic of the composite material of the invention relates to the existence of an elastic-plastic deformation and its Poisson ratio. The composite materials of the invention display an elastic plastic deformation. Under a stress that causes the composite to elongate, the structure deforms in an elastic mode until it reached a limit after which it deforms in a plastic mode until it reaches its limit and fails structurally. This property is shown as the at break in which the material elongates under stress by at least 5% or at least 10% before reaching an elastic limit and breaking under continued stress. The preferred material has a Poisson ratio typically less than 0.5 and preferably about 0.1 to about 0.5.

The regular, essentially spherical, character of the preferred particles of the invention can be defined by the circularity of the particle and by its aspect ratio. The aspect ratio of the particles should be less than 1:3 and often less than 1:1.5 and should reflect a substantially circular cross section or spherical particle. The circularity, circularity or roughness of the particle can be measured by a microscopic inspection of the particles in which an automated or manual measurement of roughness can be calculated. In such a measurement, the perimeter of a representative selection of the particulate is selected and the area of the particle cross section is also measured. The circularity of the particle is calculated by the following formula:

$$\text{Circularity} = (\text{perimeter})^2 / \text{area}.$$

An ideal spherical particle has a circularity characteristic of about 12.6. This circularity characteristic is unitless parameter of less than about 20, often about 14 to 20 or 13 to 18.

Metal particulate that can be used in the composites of the invention include tungsten, uranium, osmium, indium, platinum, rhenium, gold, neptunium, plutonium and tantalum and can have a secondary metal such as iron, copper, nickel, cobalt, tin, bismuth and zinc. While an advantage is that non-toxic or non-radioactive materials can be used as a substitute for lead and depleted uranium where needed, lead and uranium can be used when the materials have no adverse impact on the intended use. Another advantage of the invention is the ability to create bimetallic or higher composites that use two or more metal materials that cannot naturally form an alloy. A variety of properties can be tailored through a careful selection of metal or a combination of metals and polymer and the toxicity or radioactivity of the materials can be designed into the materials as desired. These materials are not used as large metal particles, but are typically used as small metal particles, commonly called metal particulates. Such particulates have a relatively low aspect ratio and are typically less than about 1:3 aspect ratio. An aspect ratio is typically defined as the ratio of the greatest dimension of the particulate divided by the smallest dimension of the particulate. Generally, spherical particulates are preferred, however, sufficient packing densities can be obtained from relatively uniform particles in a dense structure.

The composite materials of the invention combine a metal particulate at a maximum tap density leaving an excluded volume and a polymer material substantially occupying the excluded volume, but no more, to obtain the highest possible density from the composite composition.

A variety of high-density metals can be used. Tungsten (W) has an atomic weight of 183.84; an atomic number of 74 and is in Group VIB(6). Naturally occurring isotopes are 180 (0.135%); 182 (26.4%); 183 (14.4%); 184 (30.6%); 186 (28.4%) and artificial radioactive isotopes are 173-179; 181; 185;187-189. Tungsten was discovered by C. W. Scheele in 1781 and isolated in 1783 by J. J. and F. de Elhuyar. One of the rarer metals, it comprises about 1.5 ppm of the earth's crust. Chief ores are Wolframite [(Fe,Mn)$WO_4$ and Scheelite ($CaWO_4$) found chiefly in China, Malaya, Mexico, Alaska, South America and Portugal. Scheelite ores mined in the U.S. carry from 0.4-1.0% $WO_3$. Description of isolation processes are found in K. C. Li, C. Y. Wang, Tungsten, A.C.S. Monograph Series no. 94 (Reinhold, New York, 3rd ed., 1955) pp 113-269; G. D. Rieck, Tungsten and Its Compound (Pergamon Press, New York, 1967) 154 pp. Reviews: Parish, Advan. Inorg. Chem. Radiochem. 9, 315-354 (1966); Rollinson, "Chromium, Molybdenum and Tungsten" in Comprehensive Inorganic Chemistry Vol. 3, J. C. Bailar, Jr. et al., Eds. (Pergamon Press, Oxford, 1973) pp 623-624, 742-769. Tungsten is a steel-gray to tin-white metal having in crystal form, a body centered cubic structure. Its density is $d_4^{20}$ 18.7-19.3; Its hardness is 6.5-7.5, melting point is 3410°C, boiling point is 5900°C, specific heat (20°C) is 0.032 cal/g/°C, heat of fusion is 44 cal/g, heat of vaporization is 1150 cal/g and electrical resistivity (20°C) is 5.5 $\mu$ohm-cm. Tungsten is stable in dry air at ordinary temperatures, but forms the trioxide at red heat, is not attacked by water, but is oxidized to the dioxide by steam. Particulate tungsten can be pyrophoric under the right conditions and is slowly soluble in fused potassium hydroxide or sodium carbonate in presence of air; is soluble in a fused mixture of NaOH and nitrate. Tungsten is attacked by fluorine at room temperature; by chlorine at 250-300°C giving the hexachloride in absence of air, and the trioxide and oxychloride in the presence of air. In summary the melting point is 3410°C, the boiling point is 5900°C and the density is $d_4^{20}$ 18.7-19.3.

Uranium (U) has an atomic weight of 238.0289 (characteristic naturally occurring isotopic mixture); an atomic number of 92 with no stable nuclides. Naturally occurring isotopes are 238 (99.275%); 235 (0.718%); 234 (0.005%); artificial radioactive isotopes are 226-233; 236; 237; 239; 240. Uranium comprises about 2.1 ppm of the earth's crust. Main uranium ores of commercial interest are carnotite, pitchblende, tobemite and autunite. Commercially important mines are located in Elliot Lake-Blind River area in Canada, Rand gold fields in South Africa, Colorado and Utah in the United States, in Australia and in France. The discovery from pitchblende is found in M.H. Klaproth, Chem. Ann. II, 387 (1789). Preparation of the metal is found in E. Peligot, C.R. Acad. Sci 12, 735 (1841) and Idem, Ann. Chim. Phys. 5,5 (1842). Flow sheet and details of preparation of pure uranium metal are found in Chem. Eng.62, No. 10, 113 (1955); Spedding et al., U.S. Patent No. 2,852,364 (1958 to U.S.A.E.C.). Reviews: Mellor's Vol. XII, 1-138 (1932); C.D. Harrington, A.R. Ruehle, Uranium Production Technology (Van Nostrand, Princeton, 1959); E.H.P. Cordfunke, The Chemistry of Uranium (Elsevier, New York, 1969) 2550 pp; several authors in Handb. Exp. Pharmakol, 36, 3-306 (1973); "The Actinides," in Comprehensive Inorganic Chemistry Vol. 5, J.C. Bailar, Jr., et al., Eds. (Pergamon Press, Oxford, 1973) *passim*;F. Weigel in Kirk.Othmer Encyclopedia of Chemical Technology Vol. 23 (Wiley-Interscience, New York, 3rd ed., 1983) pp 205-547; *idem* in The Chemistry of the Actinide Elements Vol. 1, J.J Katz et al., Eds. (Chapman an Hall, pp 169-442; J.C. Spirlet et al., Adv.Inorg. Chem. 31, 1-40 (1987). A review of toxicology and health effects is found in Toxicological Profile for Uranium (PB91-180471, 1990) 205 pp. Uranium is a silver-white, lustrous, radioactive metal that is both malleable and ductile, and tarnishes rapidly in air forming a layer of dark-colored oxide. Heat of vaporization is 446.7 kJ/mol; heat of fusion is 19.7 kJ/mol; heat of sublimation is 487.9 kJ/mol. Particulate uranium metal and some uranium compounds may ignite spontaneously in air or oxygen and are rapidly soluble in aqueous HCl. Non-oxidizing acids such as sulfuric, phosphoric and hydrofluoric react only very slowly with uranium; nitric acid dissolves uranium at a moderate rate; and dissolution of particulate Uranium in nitric acid may approach explosive violence; Uranium metal is inert to alkalis. In summary, the melting point is 1132.8 $\pm$ 0.8° and density is 19.07; d 18.11; d 18.06.

Osmium ($O_S$) has an atomic weight of 190.23; an atomic number of 76 and is in Group VIII(8). Naturally occurring isotopes are 184 (0.02%); 186 (1.6%); 187 (1.6%); 188 (13.3%); 189 (16.1%); 190 (26.4%); 192 (41.0%). Artificial radioactive isotopes are 181-183; 185; 191; 193-195. Osmium comprises about 0.001 ppm of the earth's crust and is found in the mineral osmiridium and in all platinum ores. Tennant discovered osmium in 1804. Preparation is found in Berzelius et al.,cited by Mellor, A Comprehensive Treatise on Inorganic and Theoretical Chemistry 15, 6887 (1936). Reviews: Gilchrist, Chem. Rev. 32,277-372 (1943); Beamish et al., in Rare Metals Handbook, C.A. Hampel, Bd. (Reinhold New York, 1956) pp 291-328; Griffith, Quart. Rev. 19, 254-273 (1965); *idem,* The Chemistry of the Rarer Platinum Metals (John Wiley, New York, 1967) pp 1-125; Livingstone in Comprehensive Inorganic Chemistry, Vol 3, J.C. Bailar, Jr. et al. Eds. (Pergamon Press, Oxford, 1973) pp 1163-1189, 1209-1233. Osmium is a bluish-white, lustrous metal with a closed-packed hexagonal structure. With a density of $d_4^{20}$ 22.61, it has been long believed to be the densest element X-ray data has shown it to be slightly less dense than iridium with a melting point of about 2700°C, boiling point of about 5500°C, a density of $d_4^{20}$ 22.61, specific heat (0°C) 0.0309 cal/g/°C and hardness 7.0 on Mohs' scale. Osmium is stable in cold air and, in the particulate, is slowly oxidized by air even at ordinary temperature to form tetroxide. Osmium is attacked by fluorine above 100°C, by dry chlorine on heating, but not attacked by bromine or iodine. Osmium is attacked by aqua regia, by oxidizing acids over a long period of time, but barely affected by HCl, $H_2SO_4$. Osmium bums in vapor of phosphorus to form a phosphide, in vapor of sulfur to form a sulfide. Osmium is also attacked by molten alkali hydrosulfates, by potassium hydroxide and oxidizing agents. Particulate osmium absorbs a considerable amount of hydrogen. In summary, osmium has a melting point of about 2700°C, a boiling point of about 5500°C and a density of $d_4^{20}$ 22.61.

Iridium (Ir) has an atomic weight of 192.217 and an atomic number of 77. Naturally occurring isotopes are 191 (38.5%); 193 (61.5%) and artificial radioactive isotopes are 182-191; 194-198. It comprises about 0.001 ppm of the earth's crust. Iridium was discovered by Tennant. It occurs in nature in the metallic state, usually as a natural alloy with osmium (osmiridium) and found in small quantities alloyed with native platinum (platinum mineral) or with native gold. Recovery and purification from osmiridium are found in Deville, Debray, Ann. Chim. Phys. 61, 84 (1861); from the platinum mineral: Wichers, J. Res. Nat. Bur. Stand. 10, 819 (1933). *Reviews* of preparation, properties and chemistry of iridium and other platinum metals: Gilchrist, Chem. Rev. 32, 277-372 (1943); W.P. Griffith, the Chemistry of the Rare Platinum Metals (John Wiley, New York, 1967) pp 1-41, 227-312; Livingstone in Comprehensive Inorganic Chemistry Vol. 3, J.C. Bailar Jr. et al., Eds. (Pergamon Press, Oxford, 1973) pp 1163-1189, 1254-1274. Iridium is a silver-white, very hard metal; face-centered cubic lattice with a melting point of 2450°C, boiling point of about 4500°C with a density of $d_4^{20}$ 22.65, specific heat of 0.0307 cal/g/°C, Mohs' hardness of 6.5 and has the highest specific gravity of all elements. Acids including aqua regia do not attack pure iridium and only the metal is slightly attacked by fused (non-oxidizing) alkalis. It is superficially oxidized on heating in the air, is attacked by fluorine and chlorine at a red heat, attacked by potassium sulfate or by a mixture of potassium hydroxide and nitrate on fusion, attacked by lead, zinc or tin. Particulate metal is oxidized by air or oxygen at a red heat to the dioxide, $IrO_2$, but on further heating the dioxide dissociates into its constituents. In summary, iridium has a melting point of 2450°C, a boiling point of about 4500°C and a density of $d_4^{20}$ 22.65.

Platinum (Pt) has an atomic weight of 195.078, an atomic number of 78 and is in Group VIII(10). Naturally occurring isotopes are 190 (0.01%); 192 (0.8%); 194 (32.9%; 195 (33.8%); 196 (25.2%); 198 (7.2%); 190 is radioactive: $T_{1/2}$ 6.9 x $10^{11}$ years. Artificial radioactive isotopes are 173-189; 191; 193; 197; 199-201. Platinum comprises about 0.01 ppm of the earth's crust. It is believe to be mentioned by Pliny under the name "alutiae" and has been known and used in South America as "platina del Pinto". Platinum was reported by Ulloa in 1735; brought to Europe by Wood, and described by Watson in 1741. It occurs in native form alloyed with one or more members of its group (iridium, osmium, palladium, rhodium, and ruthenium) in gravels and sands. Preparation is found in Wichers et al, Trans. Amer. Inst. Min. Met. Eng. 76, 602 (1928). *Reviews* of preparation, properties and chemistry of platinum and other platinum metals: Gilchrist, Chem. Rev. 32, 277-372 (1943); Beamish et al., Rare Metals Handbook, C.A. Hampel, Ed. (Reinhold, New York, 1956) pp 291-328; Livingstone, Comprehensive Inorganic chemistty, Vol. 3, J.C. Bailar, Jr. et al., Eds. (Pergamon press, Oxford, 1973) pp 1163-1189, 1330-1370; F.R. Harley, The Chemistry of Platinum and Palladium with Particular Reference to Complexes of the Elements (Halsted Press, New York, 1973). Platinum is a silver-gray, lustrous, malleable and ductile metal; face-centered cubic structure; prepared in the form of a black particulate (platinum black) and as spongy masses (platinum sponge). Platinum has a melting point of 1773.5 ± 1°C; Roeser et al., Nat Bur. Stand. J. Res. 6, 1119 (1931); boiling point of about 3827°C with a density of $d_4^{20}$ 21.447 (calcd.); Brinell hardness of 55; specific heat of 0.0314 cal/g at 0°C; electrical resistivity (20°C) of 10.6 μohm-cm.; does not tarnish on exposure to air, absorbs hydrogen at a red heat and retains it tenaciously at ordinary temperature; gives off the gas at a red heat *in vacuo;* occludes carbon monoxide, carbon dioxide, nitrogen; volatilizes considerably when heated in air at 1500°C. The heated metal absorbs oxygen and gives it off on cooling. Platinum is not affected by water or by single mineral acids, reacts with boiling aqua regia with formation of chloroplatinic acid, and also with molten alkali cyanides. It is attacked by halogens, by fusion with caustic alkalis, alkali metrates, alkali peroxides, by arsenates and phosphates in the presence of reducing agents. In summary, platinum has a melting point of 1773.5 ± 1°C; Roeser et al., Nat. Bur. Stand. J. Res. 6, 1119 (1931), boiling point about 3827°C and a density of 21.447 (calcd).

Gold (Au) has an atomic weight of 196.96655; an atomic number of 79 and is in Group IB(11). Naturally occurring isotope 197; artificial isotopes (mass numbers) are 177-179, 181, 183, 185-196, 198-203. Gold comprises 0.005 of the earth's crust. Gold is probably the first pure metal known to man. It occurs in nature in its native form and in minute quantities in almost all rocks and in seawater. Gold ores including calavarite ($AuTe_2$), sylvanite [(Ag,Au)$Te_2$], petzite [(Ag,Au)$_2$Te]. Methods of mining, extracting and refining are found in Hull, Stent, in Modern Chemical Processes, Vol. 5 (Reinhold, New York, 1958) pp 60-71. Laboratory preparation of gold particulate from gold pieces is found in Block, Inorg. Syn 4, 15 (1953). Chemistry of gold drugs in the treatment of rheumatoid arthritis is found in D.H. Brown, W.E. Smith, Chef. Soc. Rev. 9, 217 (1980). Use as a catalyst in oxidation of organic compounds by $NO_2$ is found in R.E. Sievers, S.A. Nyarady, J. Am. Chem. Soc. 107, 3726 (1985). Least reactive metal at interfaces with gas or liquid is found in B. Hammer, J.K. Norskov, Nature 373, 238 (1995). Reviews: Gmelin's Handb. Anorg. Chem., Gold (8th ed.) 62, parts 2,3 (1954); Johnson, Davis, "Gold" in Comprehemsive Inorganic Chemistry, Vol. 3, J.C. Bailar Jr. et al., Eds. (Pergamon Press, Oxford, 1973) pp 129-186; J.G. Cohn, E.W. Stem in Kirk-Othmer Encyclopedia of Chemical Technology Vol. 11 (Wiley Interscience, New York, 3rd ed., 1980) pp 972-995. Gold is a yellow, soft metal; face-centered cubic structure; and when prepared by volatilization or precipitation methods, deep violet, purple, or ruby particulate, melting point of 1064.76°C; boiling point of 2700°C with a density of 19.3; Moh's hardness of 2.5-3.0; Brinell hardness of 18.5. Gold is extremely inactive; not attacked by acids, air or oxygen; superficially attacked by aqueous halogens at room temperature; reacts with aqua regia, with mixtures containing chlorides, bromides or iodides if they can generate nascent halogens, with many oxidizing mixtures especially those containing halogens, alkali cyanides, solutions of thiocyanates and double cyanides. In summary, gold has a melting point of 1064.76°C, boiling point of 2700°C and density of 19.3.

Rhenium (Re) has an atomic weight of 186.207; an atomic number of 75 and is in Group VIIB(7). Naturally occurring isotopes are 185 (37.07%); 187 (62.93%), the latter is radioactive, $T_{1/2} \sim 10^{11}$ years; artificial radioactive isotopes are 177-184; 186; 188-192. Rhenium comprises about 0.001 ppm of the earth's crust. It occurs in gadolinite, molybdenite, columbite, rare earth minerals, and some sulfide ores. Rhenium was discovered by Nodack et al, Naturwiss. 13, 567, 571 (1925). Preparation of metallic rhenium by reduction of potassium perrhenate or ammonium perrhenate is found in Hurd, Brim, Inorg. Syn 1, 175 (1939) and preparation of high purity rhenium is found in Rosenbaum et al., J. Electrochem. Soc. 103, 18 (1956). Reviews: Mealaven in rare Metals Handbook, C.A. Hampel, Ed. (Reinhold, New York, 1954) pp 347-364; Peacock in Comprehensive Inorganic Chemistry Vol. 3, J.C. Bailar, Jr. et al., Eds. (Pergamon Press, Oxford, 1973) pp 905-978; P.M. Treichel in Kirk-Othmer Encyclopedia of Chemical Technology Vol. 20 (Wiley-Interscience, New York, 3rd ed., 1982) pp 249-258. Rhenium has hexagonal close-packed crystals, black to silver-gray; has a density of d 21.02; melting point of 3180°C; boiling point of 5900°C (estimated); specific heat of 0-20°C 0.03263 cal/g/°C; specific electrical resistance of 0.21 x 10$^{-4}$ ohm/cm at 20°C; Brinell hardness of 250; latent heat of vaporization of 152 kcal/mol and reacts with oxidizing acids, nitric and concentrated sulfuric acid, but not with HCl. In summary, Rhenium has a melting point of 3180°C, boiling point of 5900°C (estimated) and density of 21.02.

Neptunium (Np) has an atomic number of 93. It is the first man-made transuranium element with no stable nuclides. Known isotopes (mass numbers) are 227-242. The discovery of isotope 239 ($T_{1/2}$ 2.355 days, alpha-decay, relative atomic mass of 239.0529) can be found in E. McMillan, P. Abelson, Phys. Rev. 57, 1185 (1940); of isotope 237 ($T_{1/2}$ 2.14 x 10$^6$ years, the longest-lived known isotope, relative atomic mass of 237.0482) can be found at A.C. Wahl, G.T. Seaborg, *ibid.* 73, 940 (1948). Preparation of metal is found in S. Fried, N. Davidson, J. Am. Chem. Soc. 70, 3539 (1948); L.B. Magnusson, TJ. LaChapelle, ibid. 3534. Neptunium's presence in nature is found in Seaborg, Perlman, *ibid* 70, 1571 (1948). Chemical properties are found in Seaborg, Wahl, *ibid.* 1128. Reviews: C. Keller, the chemistry of the Transactinide Elements (Verlag Chemie, Weinheim, English Ed., 1971) pp 253-332; W.W. Schulz, G.E. Benedict, Neptunium-237; Production and Recovery, AEC Critical Review Series (USAEC, Washington D.C.), 1972) 85 pp; Comprehensive Inorganic Chemistry Vol. 5, J.C. Bailar, Jr. et al., Eds. (Pergamon Press, Oxford, 1973) *passim;* J.A. Fahey in The Chemistry of the Actinide Elements Vol. 1, J.J. Katz et al., Eds (Chapman and Hall, New York, 1986) pp 443-498; G.T. Seaborg in Kirk-Othmer Encyclopedia of Chemical Technology Vol. 1 (Wiley-Interscience, New York, 4th ed., 1991) pp 412-444. Neptunium is a silvery metal; develops a thin oxide layer upon exposure to air for short periods. It reacts with air at high temperatures to form $NpO_2$ with an extrapolated boiling point of 4174°C. Neptunium has been obtained in its five oxidation states in solution; the most stable is the pentavalent state. Tetravalent Neptunium is readily oxidized to the hexavalent state by permanganate in the cold, or by strong oxidizing agents; on electrolytic reduction in an atmosphere of nitrogen, the trivalent form is obtained. In summary, Neptunium has a melting point of 637°C; a boiling point of 4174°C and a density of d 20.45; d 19.36.

Plutonium (Pu) has an atomic number of 94 with no stable nuclides. Known isotopes (mass numbers) are 232-246. the longest-lived known isotopes are $^{242}$Pu ($T_{1/2}$ 3.76 x 10$^5$ years, relative atomic mass 242.0587), 244 ($T_{1/2}$ 8.26 x 10$^7$ years, relative atomic mass 244.0642). Commercially useful isotopes are $^{238}$Pu ($T_{1/2}$ 87.74 years, relative atomic mass 238.0496); $^{239}$Pu ($T_{1/2}$ 2.41 x 10$^4$ years; relative atomic mass 239.0522). Plutonium comprises 10$^{-22}$% of the earth's crust. The discovery of isotope 238Pu is found in G.T. Seaborg et al., Phys. Rev. 69, 366,367 (1946); of isotope $^{239}$Pu in J.W. Kennedy et al., *ibid* 70 555 (1946). Solution of $^{239}$Pu from pitchblende is found in G.T. Saborg, M.L. Perlman, J. Am. Chem. Soc. 70, 1571 (1948). Preparation of metal is found in B.B. Cunningham, L.B. Werner, *ibid. 71,* 1521 (1949). Chemical properties are found in Seaborg, Wal, *ibid.* 1128; Harvey et al., J. Chem. Soc. 1947, 1010. Reviews: J.M. Cleveland, the Chemistry of Plutonium (Gordon & Breach, New York, 1970) 653 pp; C. Keller, The Chemistry of the Transuranium Elements (Verlag Chemie, Weinheim, English Ed., 1971) pp 333-484; Comprehensive Inorganic Chemistry Vol. 5, J.C. Bailar, Jr. et al., Eds. (Pergamon Press, Oxford, 1973) *passim;* Handb. Exp. Pharmakol 36 307-688 (1973); F. Weigel in Kirk-Othmer Encyclopedia of Chemical Technology Vol. 18 (Wiley-Interscience, New York, 3rd ed., 1982) pp 278-301; Plutonium Chemistry, W.T. Carnall, G.R. Choppin, Eds. (Am. Chem. Soc., Washington, D.C., 1983) 484 pp; F. Weigel et al in The Chemistry of the Actinide Elements Vol. 1, J.J. Katz et al., Eds. (Chapman and Hall, New York, 1986) pp 499-886. Review of toxicology is found in W.J. Bair, R.C. Thompson, Science 183, 715-722 (1974); and health effects are found in Toxicological Profile for Plutonium (PB91-180406, 1990) 206 pp. Plutonium is a silvery-white metal that is highly reactive. It oxidizes readily in dry air and oxygen, the rate increasing in the presence of moisture. In summary, Plutonium has a melting point of 640 ± 2°C and densities of d$^{21}$ 19.86; d$^{190}$ 17.70; d$^{235}$ 17.14; d$^{320}$ 15.92; d$^{405}$ 16.00; d$^{490}$ 16.51.

Tantalum (Ta) has an atomic weight of 180.9479; atomic number of 73 and is in Group VB(5). Naturally occurring isotopes are 181 (99.9877%); 180 (0.0123%), $T_{1/2} > 10^{12}$ years; artificial radioactive isotopes are 172-179; 182-186. Tantalum occurs almost invariably with niobium, but less abundant than niobium. It is found in the minerals columbite, q.v., tantalite ([(Fe,Mn)(Ta,Nb)$_2$O$_6$] and microlite [(Na,Ca)$_2$Ta$_2$O(O,OH,F)]. Tantalum was discovered by Edeberg in 1802; first obtained pure by Bolton in Z. Elektrochem. 11, 45 (1905). Preparation is found in Schoeller, Powell, J. Chem. Soc. 119, 1927 (1921). Reviews: G.L. Miller, Tantalum and Niobium (Academic Press, New York, 1959) 767 pp; Brown, "The Chemistry of Niobium and Tantalum" in Comprehensive Inorganic Chemistry Vol. 3, J.C. Bailar, Jr. et al., Eds. (Pergamon Press, Oxford, 1973) pp 553-622. Tantalum is a gray, very hard, malleable, ductile metal that can be readily drawn in fine wires; has a melting point of 2996°C; a boiling point of 5429°C, a density of d 16.69; specific heat 0°C: 0.036 cal/g/°C; electrical resistivity (18°C): 12.4 μohm-cm; insoluble in water; very resistant to chemical attack; not attacked by acids other than hydrofluoric and not attacked by aqueous alkalis; slowly attacked by fused alkalis. It reacts with fluorine, chlorine and oxygen only on heating and at high temperatures absorbs several hundred times its volume of hydrogen; combines with nitrogen, with carbon. In summary, Tantalum has a melting point of 2996°C, boiling point of 5429°C and a density of d 16.69.

A large variety of polymer materials can be used in the composite materials of the invention. For the purpose of this application, a polymer is a general term covering either a thermoset or a thermoplastic. We have found that polymer materials useful in the invention include both condensation polymeric materials and addition or vinyl polymeric materials. Included are both vinyl and condensation polymers, and polymeric alloys thereof. Vinyl polymers are typically manufactured by the polymerization of monomers having an ethylenically unsaturated olefinic group. Condensation polymers are typically prepared by a condensation polymerization reaction which is typically considered to be a stepwise chemical reaction in which two or more molecules combined, often but not necessarily accompanied by the separation of water or some other simple, typically volatile substance. Such polymers can be formed in a process called polycondensation. The polymer has a density of at least 0.85 gm-cm$^{-3}$, however, polymers having a density of greater than 0.96 are useful to enhance overall product density. A density is often up to 1.7 or up to 2 gm-cm$^{-3}$ or can be about 1.5 to 1.95 gm-cm$^{-3}$ depending on metal particulate and end use.

Vinyl polymers include polyethylene, polypropylene, polybutylene, acrylonitrile-butadiene-styrene (ABS), polybutylene copolymers, polyacetyl resins, polyacrylic resins, homopolymers or copolymers comprising vinyl chloride, vinylidene chloride, fluorocarbon copolymers, etc. Condensation polymers include nylon, phenoxy resins, polyarylether such as polyphenylether, polyphenylsulfide materials; polycarbonate materials, chlorinated polyether resins, polyethersulfone resins, polyphenylene oxide resins, polysulfone resins, polyimide resins, thermoplastic urethane elastomers and many other resin materials.

Condensation polymers that can be used in the composite materials of the invention include polyamides, polyamide-imide polymers, polyarylsulfones, polycarbonate, polybutylene terephthalate, polybutylene naphthalate, polyetherimides, polyethersulfones, polyethylene terephthalate, thermoplastic polyimides, polyphenylene ether blends, polyphenylene sulfide, polysulfones, thermoplastic polyurethanes and others. Preferred condensation engineering polymers include polycarbonate materials, polyphenyleneoxide materials, and polyester materials including polyethylene terephthalate, polybutylene terephthalate, polyethylene naphthalate and polybutylene naphthalate materials.

Polycarbonate engineering polymers are high performance, amorphous engineering thermoplastics having high impact strength, clarity, heat resistance and dimensional stability. Polycarbonates are generally classified as a polyester or carbonic acid with organic hydroxy compounds. The most common polycarbonates are based on phenol A as a hydroxy compound copolymerized with carbonic acid. Materials are often made by the reaction of a bisphenol A with phosgene (O=CCl$_2$). Polycarbonates can be made with phthalate monomers introduced into the polymerization extruder to improve properties such as heat resistance, further trifunctional materials can also be used to increase melt strength or extrusion blow molded materials. Polycarbonates can often be used as a versatile blending material as a component with other commercial polymers in the manufacture of alloys. Polycarbonates can be combined with polyethylene terephthalate acrylonitrile-butadiene-styrene, styrene maleic anhydride and others. Preferred alloys comprise a styrene copolymer and a polycarbonate. Preferred polycarbonate materials should have a melt index between 0.5 and 7, preferably between 1 and 5 gms/10 min.

A variety of polyester condensation polymer materials including polyethylene terephthalate, polybutylene terephthalate, polyethylene naphthalate, polybutylene naphthalate, etc. can be useful in the composites of the invention. Polyethylene terephthalate and polybutylene terephthalate are high performance condensation polymer materials. Such polymers often made by a copolymerization between a diol (ethylene glycol, 1,4-butane diol) with dimethyl terephthalate. In the polymerization of the material, the polymerization mixture is heated to high temperature resulting in the transesterification reaction releasing methanol and resulting in the formation of the engineering plastic. Similarly, polyethylene naphthalate and polybutylene naphthalate materials can be made by copolymerizing as above using as an acid source, a naphthalene dicarboxylic acid. The naphthalate thermoplastic have a higher Tg and higher stability at high temperature compared to the terephthalate materials. However, all these polyester materials are useful in the composite materials of the invention. Such materials have a preferred molecular weight characterized by melt flow properties. Useful polyester materials have a viscosity at 265°C of about 500-2000 cP, preferably 800-1300 cP.

Polyphenylene oxide materials are engineering thermoplastics that are useful at temperature ranges ad high as 330°C. Polyphenylene oxide has excellent mechanical properties, dimensional stability, and dielectric characteristics. Commonly, phenylene oxides are manufactured and sold as polymer alloys or blends when combined with other polymers or fiber. Polyphenylene oxide typically comprises a homopolymer of 2,6-dimethyl-1-phenol. The polymer commonly known as poly(oxy-(2,6-dimethyl-1,4-phenylene)). Polyphenylene is often used as an alloy or blend with a polyamide, typically nylon 6-6, alloys with polystyrene or high impact styrene and others. A preferred melt flow index in gm/10min (ASTM 1238) for the polyphenylene oxide material useful in the invention typically ranges from about 1 to 20, preferably about 5 to 10 gm/10 min. The melt viscosity is about 1000 cP at 265°C.

Another class of thermoplastic include styrenic copolymers. The term styrenic copolymer indicates that styrene is copolymerized with a second vinyl monomer resulting in a vinyl polymer. Such materials contain at least a 5 mol-% styrene and the balance being 1 or more other vinyl monomers. An important class of these materials are styrene acrylonitrile (SAN) polymers. SAN polymers are random amorphous linear copolymers produced by copolymerizing styrene acrylonitrile and optionally other monomers. Emulsion, suspension and continuous mass polymerization techniques have been used. SAN copolymers possess transparency, excellent thermal properties, good chemical resistance and hardness. These polymers are also characterized by their rigidity, dimensional stability and load bearing capability. Olefin modified SAN's (OSA polymer materials) and acrylic styrene acrylonitriles (ASA polymer materials) are known. These materials are somewhat softer than unmodified SAN's and are ductile, two phased terpolymers that have surprisingly improved weatherability.

ASA polymers are random amorphous terpolymers produced either by mass copolymerization or by graft copolymerization. In mass copolymerization, an acrylic monomer styrene and acrylonitrile are combined to form a heteric terpolymer. In an alternative preparation technique, styrene acrylonitrile oligomers and monomers can be grafted to an achylic elastomer backbone. Such materials are characterized as outdoor weatherable and UV resistant products that provide excellent accommodation of color stability property retention and property stability with exterior exposure. These materials can also be blended or alloyed with a variety of other polymers including polyvinyl chloride, polycarbonate, polymethyl methacrylate and others. An important class of styrene copolymers includes the acrylonitrile-butadiene-styrene monomers. These polymers are very versatile family of engineering thermoplastics produced by copolymerizing the three monomers. Each monomer provides an important property to the final terpolymer material. The final material has excellent heat resistance, chemical resistance and surface hardness combined with processability, rigidity and strength. The polymers are also tough and impact resistant. The styrene copolymer family of polymers have a melt flow index that ranges from about 0.5 to 25 gm/10 min, preferably about 0.5 to 20 gm/10 min.

An important class of engineering polymers that can be used in the composites of the invention include acrylic polymers. Acrylics comprise a broad array of polymers and copolymers in which the major monomeric constituents are an ester acrylate or methacrylate. These polymers are often provided in the form of hard, clear sheet or pellets. Acrylic monomers polymerized by free radical processes initiated by typically peroxides, azo compounds or radiant energy. commercial polymer formulations are often provided in which a variety of additives are modifiers used during the polymerization provide a specific set of properties for certain applications. Pellets made for polymer grade applications are typically made either in bulk (continuous solution polymerization), followed by extrusion and pelleting or continously by polymerization in an extruder in which unconverted monomer is removed under reduced pressure and recovered for recycling. Acrylic plastics are commonly made by using methyl acrylate, methylmethacrylate, higher alkyl acrylates and other copolymerizable vinyl monomers. Preferred acrylic polymer materials useful in the composites of the invention has a melt index of about 0.5 to 50 gm/10 min, preferably about 1 to 30 gm/10 min

Vinyl polymer polymers include a acrylonitrile; polymer of alpha-olefins such as ethylene, propylene, etc.; chlorinated monomers such as vinyl chloride, vinylidene dichloride, acrylate monomers such as acrylic acid, methylacrylate, methylmethacrylate, acrylamide, hydroxyethyl acrylate, and others; styrenic monomers such as styrene, alphamethyl styrene, vinyl toluene, etc.; vinyl acetate; and other commonly available ethylenically unsaturated monomer compositions.

Polymer blends or polymer alloys can be useful in manufacturing the pellet or linear extrudate of the invention. Such alloys typically comprise two miscible polymers blended to form a uniform composition. Scientific and commercial progress in the area of polymer blends has lead to the realization that important physical property improvements can be made not by developing new polymer material but by forming miscible polymer blends or alloys. A polymer alloy at equilibrium comprises a mixture of two amorphous polymers existing as a single phase of intimately mixed segments of the two macro molecular components. Miscible amorphous polymers form glasses upon sufficient cooling and a homogeneous or miscible polymer blend exhibits a single, composition dependent glass transition temperature (Tg). Immiscible or non-alloyed blend of polymers typically displays two or more glass transition temperatures associated with immiscible polymer phases. In the simplest cases, the properties of polymer alloys reflect a composition weighted average of properties possessed by the components. In general, however, the property dependence on composition varies in a complex way with a particular property, the nature of the components (glassy, rubbery or semi-crystalline), the thermodynamic state of the blend, and its mechanical state whether molecules and phases are oriented.

The primary requirement for the substantially thermoplastic engineering polymer material is that it retains sufficient thermoplastic properties such as viscosity and stability, to permit melt blending with a metal particulate, permit formation of linear extrudate pellets, and to permit the composition material or pellet to be extruded or injection molded in a thermoplastic process forming the useful product. Engineering polymer and polymer alloys are available from a number of manufacturers including Dyneon LLC, B.F. Goodrich, G.E., Dow, and duPont.

Polyester polymers are manufactured by the reaction of a dibasic acid with a glycol. Dibasic acids used in polyester production include phthalic anhydride, isophthalic acid, maleic acid and adipic acid. The phthalic acid provides stiffness, hardness and temperature resistance; maleic acid provides vinyl saturation to accommodate free radical cure; and adipic acid provides flexibility and ductility to the cured polymer. Commonly used glycols are propylene glycol which reduces crystalline tendencies and improves solubility in styrene. Ethylene glycol and diethylene glycol reduce crystallization tendencies. The diacids and glycols are condensed eliminating water and are then dissolved in a vinyl monomer to a suitable viscosity. Vinyl monomers include styrene, vinyltoluene, paramethylstyrene, methylmethacrylate, and diallyl phthalate. The addition of a polymerization initiator, such as hydroquinone, tertiary butylcatechol or phenothiazine extends the shelf life of the uncured polyester polymer. Polymers based on phthalic anhydride are termed orthophthalic polyesters and polymers based on isophthalic acid are termed isophthalic polyesters. The viscosity of the unsaturated polyester polymer can be tailored to an application. Low viscosity is important in the fabrication of fiber-reinforced composites to ensure good wetting and subsequent high adhesion of the reinforcing layer to the underlying substrate. Poor wetting can result in large losses of mechanical properties. Typically, polyesters are manufactured with a styrene concentration or other monomer concentration producing polymer having an uncured viscosity of 200-1,000 mPa.s(cP). Specialty polymers may have a viscosity that ranges from about 20 cP to 2,000 cP. Unsaturated polyester polymers are typically cured by free radical initiators commonly produced using peroxide materials. Wide varieties of peroxide initiators are available and are commonly used. The peroxide initiators thermally decompose forming free radical initiating species.

Phenolic polymers can also be used in the manufacture of the structural members of the invention. Phenolic polymers typically comprise a phenol-formaldehyde polymer. Such polymers are inherently fire resistant, heat resistant and are low in cost. Phenolic polymers are typically formulated by blending phenol and less than a stoichiometric amount of formaldehyde. These materials are condensed with an acid catalyst resulting in a thermoplastic intemiediate polymer called NOVOLAK. These polymers are oligomeric species terminated by phenolic groups. In the presence of a curing agent and optional heat, the oligomeric species cure to form a very high molecular weight thermoset polymer. Curing agents for novalaks are typically aldehyde compounds or methylene ($-CH_2-$) donors. Aldehydic curing agents include paraformaldehyde, hexamethylenetetraamine, formaldehyde, propionaldehyde, glyoxal and hexamethylmethoxy melamine.

The fluoropolymers useful in this invention are perflourinated and partially fluorinated polymers made with monomers containing one or more atoms of fluorine, or copolymers of two or more of such monomers. Common examples of fluorinated monomers useful in these polymers or copolymers include tetrafluoroethylene (TFE), hexafluoropropylene(HFP), vinylidene fluoride (VDF), perfluoroalkylvinyl ethers such as perfluoro-(n-propyl-vinyl) ether (PPVE) or perfluoromethylvinylether (PMVE). Other copolymerizable olefinic monomers, including non-fluorinated monomers, may also be present.

Particularly useful materials for the fluoropolymers are TFE-HFP-VDF terpolymers (melting temperature of about 100 to 260°C.; melt flow index at 265°C. under a 5 kg load is about 1-30 g-10 min$^{-1}$.), hexafluoropropylene-tetrafluoroethylene-ethylene (HTE) terpolymers (melting temperature about 150 to 280°C.; melt flow index at 297°C. under a 5 kg load of about 1-30 g-10 min$^{-1}$.), ethylene-tetrafluoroethylene (ETFE) copolymers (melting temperature about 250 to 275°C.; melt flow index at 297°C. under a 5 kg load of about 1-30 g-10 min$^{-1}$.), hexafluoropropylene-tetrafluoroethylene (FEP) copolymers (melting temperature about 250 to 275°C.; melt flow index at 372°C. under a 5 kg load of about 1-30 g-10 min$^{-1}$.), and tetrafluoroethylene-perfluoro(alkoxy alkane) (PFA) copolymers (melting temperature about 300 to 320°C.; melt flow index at 372°C. under a 5 kg load of about 1-30 g-10 min$^{-1}$.). Each of these fluoropolymers is commercially available from Dyneon LLC, Oakdale, Minn. The TFE-HFP-VDF terpolymers are sold under the designation "THV".

Also useful are vinylidene fluoride polymers primarily made up of monomers of vinylidene fluoride, including both homo polymers and copolymers. Such copolymers include those containing at least 50 mole percent of vinylidene fluoride copolymerized with at least one comonomer selected from the group consisting of tetrafluoroethylene, trifluoroethylene, chlorotrifluoroethylene, hexafluoropropene, vinyl fluoride, pentafluoropropene, and any other monomer that readily copolymerizes with vinylidene fluoride. These materials are further described in U.S. Patent No. 4,569,978 (Barber) incorporated herein by reference. Preferred copolymers are those composed of from at least about 70 and up to 99 mole percent vinylidene fluoride, and correspondingly from about 1 to 30 percent tetrafluoroethylene, such as disclosed in British Patent No. 827,308; and about 70 to 99 percent vinylidene fluoride and 1 to 30 percent hexafluoropropene (see for example U.S. Patent No. 3,178,399); and about 70 to 99 mole percent vinylidene fluoride and 1 to 30 percent trifluoroethylene Terpolymers of vinylidene fluoride, trifluoroethylene and tetrafluoroethylene such as described in U.S. Patent No. 2,968,649 and terpolymers of vinylidene fluoride, trifluoroethylene and tetrafluoroethylene are also representative of the class of vinylidene fluoride copolymers which are useful in this invention. Such materials are commercially available under the KYNAR trademark from Arkema Group located in King of Prussia, PA or under the DYNEON trademark from Dyneon LLC of Oakdale, MN. Fluorocarbon elastomer materials can also be used in the composite materials of the invention. Fluoropolymer contain $VF_2$ and HFP monomers and optionally TFE and have a density greater than 1.8 gm-cm$^{-3}$ fluoropolymers exhibit good resistance to most oils, chemicals, solvents, and halogenated hydrocarbons, and an excellent resistance to ozone, oxygen, and weathering. Their useful application temperature range is -40°C to 300°C. Fluoroelastomer examples include those described in detail in Lentz, U.S. Pat. No. 4,257,699, as well as those described in Eddy et al., U.S. Pat. No. 5,017,432 and Ferguson et al., U.S. Pat. No. 5,061,965. The disclosures of each of these patents are totally incorporated herein by reference.

Latex fluoropolymers are available in the form of the polymers comprising the PFA, FEP, ETFE, HTE, THV and PVDF monomers. Fluorinated poly(meth)acrylates can generally be prepared by free radical polymerization either neat or in solvent, using radical initiators well known to those skilled in the art. Other monomers which can be copolymerized with these fluorinated (meth)acrylate monomers include alkyl (meth)acrylates, substituted alkyl (meth)acrylates, (meth)acrylic acid, (meth)acrylamides, styrenes, vinyl halides, and vinyl esters. The fluoropolymers can comprise polar constituents. Such polar groups or polar group containing monomers may be anionic, nonionic, cationic, or amphoteric. In general, the more commonly employed polar groups or polar group-containing organic radicals include organic acids, particularly carboxylic acid, sulfonic acid and phosphonic acid; carboxylate salts, sulfonates, phosphonates, phosphate esters, ammonium salts, amines, amides, alkyl amides, alkyl aryl amides, imides, sulfonamides, hydroxymethyl, thiols, esters, silanes, and polyoxyalkylenes, as well as other organic radicals such as alkylene or arylene substituted with one or more of such polar groups. The latex fluoropolymers described herein are typically aqueous dispersed solids but solvent materials can be used. The fluoropolymer can combined with various solvents to form emulsion, solution or dispersion in a liquid form. Dispersions of fluoropolymers can be prepared using conventional emulsion polymerization techniques, such as described in U.S. Pat. Nos. 4,418,186; 5,214,106; 5,639,838; 5,696,216 or Modern Fluoropolymers, Edited by John Scheirs, 1997 (particularly pp. 71-101 and 597-614) as well as assignees' copending patent application Ser. No. 01/03195, filed Jan. 31, 2001.

The liquid forms can be further diluted in order to deliver the desired concentration. Although aqueous emulsions, solutions, and dispersions are preferred, up to about 50% of a cosolvent such as methanol, isopropanol, or methyl perfluorobutyl ether may be added. Preferably, the aqueous emulsions, solutions, and dispersions comprise less than about 30% cosolvent, more preferably less than about 10% cosolvent, and most preferably the aqueous emulsions, solutions, and dispersions are substantially free of cosolvent.

Interfacial modifiers used in the application fall into broad categories including, for example, stearic acid derivatives, silane compounds, titanate compounds, zirconate compounds, aluminate compounds. The choice of interfacial modifiers is dictated by metal particulate, polymer, and application. The maximum density of a composite is a function of the densities of the materials and the volume fractions of each. Higher density composites are achieved by maximizing the per unit volume of the materials with the highest densities. The materials are almost exclusively refractory metals such as tungsten or osmium. These materials are extremely hard and difficult to deform, usually resulting in brittle fracture. When compounded with deformable polymeric binders, these brittle materials may be formed into usable shapes using traditional thermoplastic equipment. However, the maximum densities achievable will be less then optimum. When forming composites with polymeric volumes approximately equal to the excluded volume of the filler, inter-particle interaction dominates the behavior of the material. Particles contact one another and the combination of interacting sharp edges, soft surfaces (resulting in gouging, points are usually work hardened) and the friction between the surfaces prevent further or optimal packing. Therefore, maximizing properties is a function of softness of surface, hardness of edges, point size of point (sharpness), surface friction force and pressure on the material, circularity, and the usual, shape size distribution. Because of this inter-particle friction the forming pressure will decrease exponentially with distance from the applied force, interfacially modifying chemistries are capable of modifying the surface of the dense filler by coordination bonding, Van der Waals forces, covalent bonding, or a combination of all three. The surface of the particle behaves as a particle of the non-reacted end of the interfacial modifier. These organics reduce the friction between particles preventing gouging and allowing for greater freedom of movement between particles. These phenomenona allow the applied shaping force to reach deeper into the form resulting in a more uniform pressure gradient.

Stearic acid compounds modify the composites of the invention, the formation of a stearic layer on the surface of the metal particle reducing the intermolecular forces, improving the tendency of the polymer mix with the metal particle, and resulting in increased composite density. Similarly, silane interfacial modifiers improve physical properties of the composites by forming chemical bonds between the metal particle and the continuous polymer phase, or by modifying the surface energy of the inorganic metal particulate matching the surface energy of the polymer at the particle polymer interface. Silane coupling agents useful in the invention include but are not limited to compounds of the following structure:

$$R\text{-}(CH_2)_n\text{-}Si\text{-}X_3$$

wherein X represents a hydrolyzable group comprising alkoxy, acyloxy, halogen or amine depending on the surface chemistry of the metal particulate and the reaction mechanism. Coupling is maximized as the number of chemical bonds between the particulate surface and polymer is maximized. When a composite will be used in an application including large amounts of aqueous media and broad temperature excursions, dipodal silanes such as bis(triethoxysilyl) ethane are chosen. These materials have the following structure:

$$R[(CH_2)_n\text{-}Si\text{-}X_3]_2$$

wherein R represents the non-hydrolyzable organic group of the silane compound. The R group may be chemically bonded to the polymer phase or as desired to remain unreactive if non-bonded interfacially modifying can be applied. When R is chemically bonded to the polymer phase, these free radicals can be added either through heat, light or in the form of peroxide catalysts or promoters and similar reactive systems. Selection of the R group additionally is made through a consideration of polymer used in the composite. Thermosetting polymers can be used to chemically bond the silane to the polymer phase if a thermoset polymer is selected. The reactive groups in the thermoset can include methacrylyl, styryl, or other unsaturated or organic materials.

Thermoplastics include polyvinylchloride, polyphenylene sulfite, acrylic homopolymers, maleic anhydride containing polymers, acrylic materials, vinyl acetate polymers, diene containing copolymers such as 1,3-butadiene, 1,4-pentadiene, halogen or chlorosulfonyl modified polymers or other polymers that can react with the composite systems of the invention. Condensation polymeric thermoplastics can be used including polyamides, polyesters, polycarbonates, polysulfones and similar polymer materials by reacting end groups with silanes having aminoalkyl, chloroalkyl, isocyanato or similar functional groups.

The manufacture of the high density metal particulate composite materials depends on good manufacturing technique. Often the metal particulate is initially treated with an interfacial modifier such as a reactive silane by spraying the particulate with a 25 wt-% solution of the silane or other interfacial modifier on the metal with blending and drying carefully to ensure uniform particulate coating of the interfacial modifiers. Interfacial modifiers such as silanes may also be added to particles in bulk blending operations using high intensity Littleford or Henschel blenders. Alternatively, twin cone mixers can be followed by drying or direct addition to a screw compounding device. Interfacial modifiers may also be reacted with the metal particulate in aprotic solvent such as toluene, tetrahydrofuran, mineral spirits or other such known solvents.

The metal particulate can be coupled to the polymer phase depending on the nature of the polymer phase, the filler, the particulate surface chemistry and any pigment process aid or additive present in the composite material. In general the mechanism used to couple metal particulate to polymer include solvation, chelation, coordination bonding (ligand formation), etc. Titanate or zirconate coupling agents can be used. Such agents have the following formula:

$$(RO)_m\text{-}Ti\text{-}(O\text{-}X\text{-}R'\text{-}Y)_n$$

$$(RO)_m\text{-}Zr\text{-}(O\text{-}X\text{-}R'\text{-}Y)_n$$

wherein m and n are 1 to 3. Titanates provide antioxidant properties and can modify or control cure chemistry. Zirconate provides excellent bond strength but maximizes curing, reduces formation of off color in formulated thermoplastic materials. A useful zirconate material is neopentyl(diallyl)oxy-tri(dioctyl)phosphato-zirconate.

The high density metal polymer composite materials having the desired physical properties can be manufactured as follows. In a preferred mode, the surface of the metal particulate is initially prepared, the interfacial modifier is reacted with the prepared particle material, and the resulting product is isolated and then combined with the continuous polymer phase to affect a reaction between the metal particulate and the polymer. Once the composite material is prepared, it is then formed into the desired shape of the end use material. Solution processing is an alternative that provides solvent recovery during materials processing. The materials can also be dry-blended without solvent. Blending systems such as ribbon blenders obtained from Drais Systems, high density drive blenders available from Littleford Brothers and Henschel are possible. Further melt blending using Banberry, veferralle single screw or twin screw compounders is also useful. When the materials are processed as a plastisol or organosol with solvent, liquid ingredients are generally charged to a processing unit first, followed by polymer polymer, metal particulate and rapid agitation. Once all materials are added a vacuum can be applied to remove residual air and solvent, and mixing is continued until the product is uniform and high in density.

Dry blending is generally preferred due to advantages in cost. However certain embodiments can be compositionally unstable due to differences in particle size. In dry blending processes, the composite can be made by first introducing the polymer, combining the polymer stabilizers, if necessary, at a temperature from about ambient to about 60°C with the polymer, blending a metal particulate (modified if necessary) with the stabilized polymer, blending other process aids, interfacial modifier, colorants, indicators or lubricants followed by mixing in hot mix, transfer to storage, packaging or end use manufacture.

Interfacially modified materials can be made with solvent techniques that use an effective amount of solvent to initiate formation of a composite. When interfacially modification is substantially complete, the solvent can be stripped. Such solvent processes are conducted as follows:

1) Solvating the interfacial modifier or polymer or both;
2) Mixing the metal particulate into a bulk phase or polymer master batch: and
3) Devolatilizing the composition in the presence of heat & vacuum above the Tg of the polymer

When compounding with twin screw compounders or extruders, a preferred process can be used involving twin screw compounding as follows.

1. Add metal particulate and raise temperature to remove surface water (barrel 1).
2. Add interfacial modifier to twin screw when filler is at temperature (barrel 3).
3. Disperse/distribute interfacial modifier on metal particulate.
4. Maintain reaction temperature to completion.
5. Vent reaction by-products (barrel 6).
6. Add polymer binder (barrel 7).
7. Compress/melt polymer binder.
8. Disperse/distribute polymer binder in particulate.
9. React modified particulate with polymer binder.
10. Vacuum degas remaining reaction products (barrel 9).
11. Compress resulting composite.
12. Form desired shape, pellet, lineal, tube, injection mold article, etc. through a die or post-manufacturing step.

Alternatively in formulations containing small volumes of continuous phase:

1. Add polymer binder.
2. Add interfacial modifier to twin screw when polymer binder is at temperature.
3. Disperse/distribute interfacial modifier in polymer binder.
4. Add filler and disperse/distribute particulate.
5. Raise temperature to reaction temperature.
6. Maintain reaction temperature to completion.
7. Compress resulting composite.
8. Form desired shape, pellet, lineal, tube, injection mold article, etc. through a die or post-manufacturing step.

Certain selections of polymers and particulates may permit the omission of the interfacial modifiers and their related processing steps.

The metal polymer composites of the invention can be used in a variety of embodiments including projectiles, fishing lures, fishing weights, automobile weights, radiation shielding, golf club components, sporting equipment, gyroscopic ballast, cellular phone vibrating weights or laboratory weight noise and vibration barriers, or other embodiments that require high density material with moldability, ductility, and dimensional stability, thermal conductivity, electrical conductivity, magnetism, and are non toxic.

The high density materials of the present invention and all its embodiments are suitable for numerous processing methods. Selection of processing methods and formulation of base materials can be based upon required end use product requirements. The following examples illustrate this point.

An embodiment of the present invention is a flexible or malleable composite that could be used in projectiles including shot gun pellets and other ammunition, stents for heart or artery applications, or radiation shielding garments. An example composite with these characteristics might include a combination of tungsten, a fluoropolymer as the binder, and a zirconate interfacial modifier. The end use product could be the result of an extrusion or injection molded part.

Yet another embodiment of the present invention is a high output production, high density composite that could be used in fishing lures or weights, or cellular phone shielding or internal vibratory mechanisms. An example composite with these characteristics might include a combination of tungsten, polyvinyl chloride as the binder, and an alkaline metal stearate or a stearate amide interfacial modifier. The end use product could be the result of an extrusion or injection molded part.

Yet another embodiment of the present invention is a low output production, high cure time, and high density composite that could be used in automobile or truck pneumatic tire wheel weights or other ballasts, or other products that could be produced in bulk forms. An example composite with these characteristics might include a combination of tungsten, polyester as the binder, and a zirconate interfacial modifier. The end use product could be the result of injection molding, or bulk molding parts.

Yet another embodiment of the present invention is a high output production, high density composite that could be used for fishing lures and automobile or truck pneumatic tire wheel weights. The wheel weight comprises attachment means and an article of mass of the composite of the invention. The weight can be attached with conventional clips or adhered to the wheel with an adhesive. An example composite with these characteristics might include a combination of tungsten, polystyrene as a binder and a zirconate interfacial modifier. The end use product could be the result of injection molding, or bulk molding parts.

In addition to the aforementioned illustrative embodiments, additional processing methods are, but not limited to; molding, compression molding, thermoset and thermoplastic extrusion, centrifugal molding, rotational molding, blow molding, casting, calendaring, liquid fill thermoset molding or filament winding to form a variety of shapes in conjunction with sequential compounding. Yet another embodiment of the invention includes the magnetic composition of the resulting composites where a magnetic component is added for identification or as dictated by the end use requirements. Magnetic additives are typically 0.1 % to 5% of the resulting composite by weight and volume fraction.

Yet another embodiment of the invention includes colorization of the resulting composites where color is important for identification or as dictated by the end use requirements. Color additives are typically less than 1% of the resulting composite by weight and volume fraction.

Composite materials of the invention can be used in a projectile in the form of a shotgun pellet or a shaped round. Shotgun pellets are typically spherical particulates having a dimension of about 0.7 to about 3 millimeters and are generally spherical, but can have a puckered or dimpled surface.

Projectiles useful in the invention typically comprise a substantial proportion of the high density composite of the invention. The projectile can comprise an extruded rod, in a jacketed or unjacketed form. The jacket can surround the composite or can leave a portion (leading end or following end) exposed. The composite can be manufactured in a variety of modes to form a projectile. The projectile can comprise about 0.1 grams to as much as 2 kilograms of the composite of the invention at least partially surrounded by a metal jacket. Such projectiles can have an tapered open leading end, an open closed end, or both, or can be entirely enclosed by the jacket. Further, the jacket can include other components such as explosives, metal tips, or other inserts to alter the center of aerodynamic pressure or the center of gravity or the center of mass of the projectile forward of or to the rear of the dimensional center. Such projectiles made from composites of the invention comprising tungsten, iron or other non-toxic metal, comprise a "green" bullet or projectile that deteriorates after use into a non-toxic material, compatible with aquatic plant and animal life. The elastic properties of the material render the projectile particularly useful. The projectile can deliver substantial inertia or kinetic energy to the target due to its high density, but also upon contact, can deform elastically causing the jacket to expand as would be the case in lead projectiles. The jacket will expand as expected, but the elastic material will spring back substantially to its initial dimensions.

The round, or projectile, can be engineered such that the center of aerodynamic pressure and the center of gravity or mass can be adjusted forward of or to the rear of the dimensional center to improve the aerodynamic capability of the round. Such rounds can be made to fly in a more stable trajectory avoiding deviation from the desired trajectory that can reduce accuracy. Further, the materials of the invention can, due to its stability, be fired at a higher firing rate with reduced weapon heating due to a reduced spin rate. In the preferred projectile of the invention, the center of gravity is placed well before the center of aerodynamic pressure and narrowly stabilizing the spinning round in its trajectory to the target.

In summary, the present invention, as dictated by the specific claims contained herein, represents a breadth of raw material combinations including; metals, polymers, interfacial modifiers, other additives, all with varying particle sizes, weight fractions, and volume fractions. The present invention also includes a breadth of processing methods, resulting physical and chemical properties, and end-use applications. The following materials exemplify the invention. The materials can all be formed, molded, extruded or otherwise made into useful composites and shapes.

## Experimental 1

The experiment consisted of three main areas of focus: density, melt flow (in $sec^{-1}$; the measurement of flow for the composite materials is defined in a test as set out below), tensile strength and elongation. Density measurements were taken by creating samples using an apparatus which mainly consisted of a metallurgical press fitted with a load cell, and a ¼ inch cylindrical die modified with a 0.1 inch diameter hole in the lower, ram. Samples created by these instruments were assumed to be perfectly cylindrical, and therefor measuring the diameter, length, and mass yielded the density of the sample.

During die extrusion, an index of melt flow was measured for each sample. By timing the sample as it passes the length calibration of the instrument, the rate in which it extruded was calculated. This linear velocity was then normalized by dividing by the orifice radius. The resulting quantity was defined as the melt flow index (MFI) of the material. To ensure complete mixing, extruded materials were re-extruded at least four more times.

The die extruded samples were also tested for tensile elongation. Each sample was trimmed to 4 inches in length, and ½ inch from each end was marked. The sample was fixed in the machines grips, where the ½ inch marked the point depth the sample was inserted into the grip. The pull to break test was executed, and upon completion the sample was removed.

Two formulations were tested in the experiment using Alldyne C-60 Tungsten and Dyneon THV220A fluoropolymer. The first formulation was designed to achieve a density of 10.8 gm-cm$^{-3}$. The second formulation was designed to achieve the density of 11.4 gm-cm$^{-3}$. Table 1 gives die weight percentages used to create the samples for both formulations. Four interfacial modifiers were tested in the experiment. The first interfacial modifier was a Zirconate coupling agent, NZ 12. The second and third modifiers were Titanate coupling agents, KR238J and LICA 09. The last interfacial modifier was a Silane, SIA0591.0.

**Table 1** effect of composite melt flow and mechanical properties with different interfacial modifiers

| Tungsten* | | Fluoropolymer | | Interfacial modifier | Extruded | Melt Flow Index | Tensile Elongation | Maximum Stress |
|---|---|---|---|---|---|---|---|---|
| % Weight | % Volume | % Weight | % Volume | | g/cc | l/g | % | MPa |
| 91.4% | 51.0% | 8.6% | 49.0% | None | 10.2 | 0.4 | 5.9% | 3.6 |
| 91.4% | 51.0% | 8.6% | 49.0% | NZ 12 | 10.1 | 27.5 | 261.7% | 2.4 |
| 91.4% | 51.0% | 8.6% | 49.0% | KR238J | 9.9 | 22.9 | 276.79% | 2.5 |
| 91.4% | 51.0% | 8.6% | 49.0% | LICA 09 | 10.4 | 18.6 | 260.6% | 2.5 |
| 91.4% | 51.0% | 8.6% | 49.0% | SIA0591.0 | 9.9 | 0.2 | 26.8% | 10.5 |
| 91.4% | 54.5% | 7.6% | 45.5% | None | 10.6 | 0.9 | 2.00% | 8.4 |
| 92.4% | 54.5% | 7.6% | 45.5% | | 11.2 | 9.2 | 300.0% | 3.1 |
| 92.4% | 54.5% | 7.6% | 45.5% | KR238J | 11.2 | 7.6 | 290.0% | 4.6 |
| 92.4% | 54.5% | 7.6% | 45.5% | LICA 09 | 11.1 | 4.9 | 225.2% | 2.7 |
| 92.4% | 54.5% | 7.6% | 45.5% | SIA0591.0 | 11.3 | 0.1 | 1.06% | 8.3 |
| *with 0.2 wt% interfacial modifier | | | | | | | | |

It was clearly observed that treatment of the tungsten powder caused considerable changes in physical properties. In all formulations, the melt flow (in sec$^{-1}$) was markedly affected with the treatment of an interfacial modifier. The melt flow (in sec$^{-1}$) of compounded materials increased as much as 68 times the untreated compounds. The effect made can also be observed in the elongation of the material. All four interfacial modifiers caused an increase in tensile elongation, with NZ 12 and KR238J causing the largest changes. As disclosed in table 1, the melt flow index for the materials treated with SIA0591.0 and the materials without an interfacial modifier were about 0.9 sec$^{-1}$ or less, while materials treated with the interfacial modifiers NZ 12, KR238J and LICA09 each had a melt flow index that was greater than 0.9 sec$^{-1}$. For the composites that were made in table 1, the melt flow index for the composites treated with NZ12, KR238J and LICA09 was at least about 4.9 sec$^{-1}$. Although the materials treated with SIA0591.0 did not exhibit an increase in melt flow (in sec$^{-1}$), they did exhibit an increase in maximum stress. The SIA0591.0 compound yielded a maximum stress approximately three fold of a 91.4 wt% Tungsten compound without an interfacial modifier.

## Experimental 2, 3 and 4

In tables 2, 3 and 4, Tungsten particulate is first treated with the interfacial modifier. This is done by dissolving a very small amount of the interfacial modifier in a beaker of solvent (usually Isopropyl, or some other, alcohol) and mixed with the Tungsten particulate in a beaker. The resulting slurry is then mixed thoroughly for about 10 minutes. The solvent substantially decanted or is evaporated at about 100°C. The particulate is then dried further in an oven. Separately, the polymer (e.g.) THV220A is dissolved in solvent (e.g. acetone). The correct weight of treated Tungsten particulate is then added to the dissolved polymer and the mixture stirred until most of the solvent has evaporated and the mixture has agglomerated. The material is then dried at 100°C for 30 minutes before it is pressed in a metallurgical die;

THV220A is a polymer of tetrafluoroethlene, hexafluoropropylene, and vinylidene fluoride. NZ 12 is neopentyl(diallyl)oxy-tri(dioctyl)phosphato-zirconate. SIA0591.0 is N-(2-aminoethyl)-3-amonopropyl-trimethoxy-silane. KR 238J is a methacrylamid modified amine adduct available from Kenrich petrochemicals, Bayonne, NJ. LICA 09 is neopentyl(diallyl)oxy-tri(dodecyl)benzene-sulfonyl-titanate.

**Table 2** Effect of density and mechanical properties in fluoropolymer composite with an interfacial modifier at different concentrations

| Tungsten (19.35 g/ml) | | Thermoplastic (1.90 g/ml) | | Interfacial (NZ 12 - 1.0 | modifier g/ml) | Resulting Composite | Storage Modulus |
|---|---|---|---|---|---|---|---|
| % weight | % volume | % weight | % volume | % weight | % volume | density (g/cc) | MPa @ 25°C |
| 96.6% | 73.6% | 3.4% | 26.4% | 0.00% | 0.00% | 11.7 | 3856.0 |
| 96.6% | 73.6% | 3.3% | 26.0% | 0.03% | 0.42% | 11.7 | 743.5 |
| 96.7% | 73.6% | 3.1% | 24.3% | 0.14% | 2.09% | 11.7 to 12.2 | 372.4 |
| 97.8% | 73.6% | 0.7% | 5.4% | 1.4% | 21.0% | see note | |
| 96.7% | 73.5% | 3.3% | 25.8% | 0.05% | 0.74% | 12.2 | 711.5 |
| 96.3% | 71.9% | 3.7% | 27.8% | 0.02% | 0.3% | 12.3 | 342.8 |
| 97.9% | 81.9% | 2.1% | 18.0% | 0.01% | 0.10% | 16.2 | see note |

**Table 3** Effect of density and mechanical properties on PVC polymers with the interfacial modifier NZ 12

| Thermoplastics (PVC) | | | | | | | |
|---|---|---|---|---|---|---|---|
| Tungsten (19.35 g/ml) | | Thermopastic (1.40 Flml) | | Interfacial modifier (NZ 12 - 1.0 g/ml) | | Resulting Composite | Storage Modulus |
| % weight | % volume | % weight | % volume | % weight | % volume | MPa density (g/cc) | MPa @ 25°C |
| 97.4% | 73.1% | 2.6% | 27.0% | 0.00% | 0.00% | 11.6 | 4407.0 |
| 97.4% | 73.1% | 2.6% | 26.5% | 0.03% | 0.4% | 11.7 | 3564.0 |
| 97.5% | 73.1% | 2.4% | 24.8% | 0.1% | 2.0% | 11.9 | 2590.0 |
| 98.0% | 73.5% | 0.5% | 5.6% | 1,4% | 20.9% | See note (1) | |

| Thermosets (Polyester) | | | | | | | |
|---|---|---|---|---|---|---|---|
| Tungsten (19.35 g/ml) | | Thermoset (1.40 g/ml) | | Interfacial modifier (NZ 12 - 1.0 g/ml) | | Resulting Composite | Storage Modulus |
| % weight | % volume | % weight | % volume | % weight | % volume | density (g/cc) | MPa @ 25 °C |
| 96.6% | 59.6% | 3.4% | 40.0% | 0.04% | 0.4% | 11.7 | 7291.0 |
| Notes for the Chart: (1) Crumbled upon removal from the mold | | | | | | | |

The table of examples shows that a variety of polymers can be used to make a composite with a density greater than 10 gm-cm$^{-3}$ and useful viscoelastic properties.

Table 4 Effect of density with tungsten with particle size and circularity

| Material | Distribution <min,max> | Roundness (Circularity) Index | Tungsten* (19.35 g/ml) | | Fluoroelastomer Thermoplastic (1.90 g/ml) | | Resulting Composite |
|---|---|---|---|---|---|---|---|
| | Microns | median | % weight | % volume | % weight | % volume | density (g/cc) |
| a | 15,36 | 16.8 | 94-0% | 60.6% | 5.9% | 38.6% | 9-9 |
| f | 10,130 | 16.4 | 94.0% | 60.6% | 5.9% | 39,0% | 11.5 |
| d | 10,100 | 15.6 | 96.3% | 71.3% | 3.5% | 26.3% | 11.4 |
| e | 10,150 | 15.8 | 96.6% | 73.2% | 3.3% | 25.4% | 12.3 |
| b | 15,150 | 16.0 | 95.4% | 66.9% | 4.6% | 32.8% | 12.4 |
| g | 10,100 | 16.1 | 93.9% | 60.0% | 6.1% | 39.6% | 11.4 |
| c | 1000,4000 | 15.8 | 89.4% | 45.3% | 10.6% | 54.6% | 9.8 |
| *With 0.03-0.2 % NZ 12 interfacial modifier | | | | | | | |

These tables of data show that a thermoplastic composite can be made using a select combination of materials and that the degree of properties including density, modulus, elongation can be designed into the materials.

This Table shows that the particle size, distribution and circularity have an impact on the density of the composite. These materials a-g were made similarly to the examples Tables 1-3. All samples in Table 4 were made such that the formulation would result in the highest density for the resulting composite. Materials b and e have the maximum density due to the presence of both larger and small average particle size materials and minimum circularity of about 14. Materials a and c have the low density in the table and have either small or large particulate. The other materials either depart some what from the size or circularity parameter (of materials b and e) reducing density

## Experimental 5

The material used for the melt flow (sec$^{-1}$) experiment data in Table 5 was made as follows. Technon Plus tungsten particulate was modified and blended with the Dyneon polymer and introduced using a calibrated gravimetric feeder into the extruder. The extruder was a Brabender ¾ inch single screw with a custom screw, modified to create low compression. The heating zones were set to 175°C, 175°C, 175°C, and 185°C. The screw RPMs were maintained between 20 and 40. The barrel was air-cooled. The material exit speed was about 1 meter per minute. Into the laboratory scale Brabender extruder, a blend of 92 wt% of a Technon Plus tungsten (having a size distribution of 10 to 160 microns) was combined with 8 wt% of a fluoropolymer Dyneon THV220, a polymer modified with a Kenrich NZ 12 zirconate interfacial modifier. In this example, the interfacial modifier is directly applied to the tungsten particulate at a rate of about 0.01 wt% on the metal particulate.

Typical melt flow for the materials of the invention are at least 5 sec$^{-1}$, at least 10 sec$^{-1}$, about 10 to 250 sec$^{-1}$. In order to measure extrusion melt flow, a custom test system was created. A small hole (0.192 cm in diameter) was drilled into a 1.25 inch metallurgical die. The die was used in conjunction with an instrumented metallurgical press, which allowed monitoring of the die temperature and pressure. With the temperature of the material and pressure of the die set, the material was extruded through the melt flow hole. For a given duration of time, the length of the resulting form was measured, and the results used to determine the peak velocity. With this data, the melt flow was calculated by dividing the velocity difference of the extrudate by the die hole radius.

Table 5 The effect of temperature and pressure on melt flow (in sec$^{-1}$)

| Material Density 11.2 gm-cm$^{-3}$ (Fluoroelastomer) | | |
|---|---|---|
| Melt Flow (/sec | Melt Temp (°C) | Die Pressure |
| 7.8 | 160 | 5700 |
| 60 | 175 | 5700 |
| 220 | 190 | 5700 |

(continued)

| Material Density 11.2 gm-cm$^{-3}$ (Fluoroelastomer) | | |
|---|---|---|
| Melt Flow (/sec | Melt Temp (°C) | Die Pressure |
| | | |
| 13 | 175 | 9800 |
| 30 | 180 | 9800 |
| 230 | 190 | 9800 |
| | | |
| 7.7 | 190 | 2400 |
| 6.9 | 190 | 5700 |
| 230 | 190 | 9800 |

**Article Examples**

**Example 1 of Article Production**

Containing: Polystyrene, Technon Powder, Kronos 2073, and Ken-React NZ 12.

Formulation by weight:
| | |
|---|---|
| Polystyrene | 0.6563g |
| Techon PLUS particulate | 12.1318g |
| Kronos 2073 TiO2 particulate | 0.14719g |
| Ken-React NZ 12 | 0.2740g |

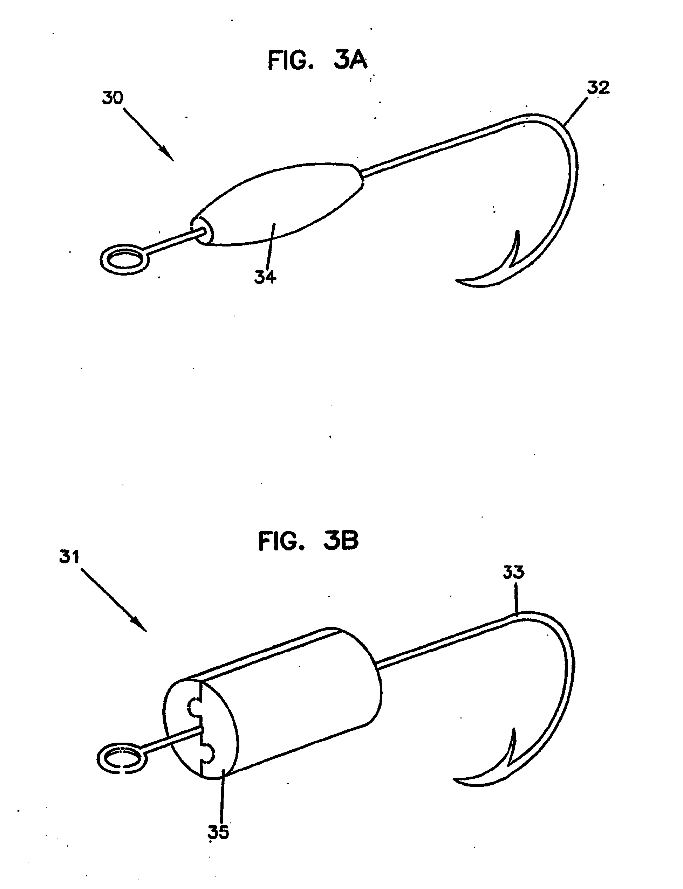

Polystyrene was dissolved in a blend of toluene, MEK and acetone to a total solid of 38 wt.-%. The two particulates were dispersed with stirring in the same solvent blend and the NZ 12 was added to this dispersion. After stirring to break the $TiO_2$ agglomerations the Polystyrene solution was added and stirred while blowing off the solvent till the blend became a semisolid. This material was then compression molded in a jig with No. 1 hook (see Figure 3).

**Example 2 of Article Production**

Containing: Polystyrene, Technon Powder, and Ken-React NZ 12.

Formulation by weight:
| | |
|---|---|
| Polystyrene | 0.6011g |
| Techon PLUS particulate | 12.0927g |
| Ken-React NZ 12 | 0.03g* |

Polystyrene was dissolved in a blend of toluene, MEK and acetone to a total solid of 38 wt-%. The W particulate was dispersed with stirring in the same solvent blend and the NZ 12 was added to this dispersion. The Polystyrene solution was added and stirred while blowing off the solvent till the blend became a semisolid. This material was then compression molded in a slip sinker.

**Example 3 of Article Production**

Containing: Polyester, Technon Powder, Kronos 2073 TiO2, and Ken-React NZ 12.

Formulation by weight:
| | |
|---|---|
| Polyester | 0.4621g |
| Techon PLUS particulate | 13.0287g |

(continued)

| Kronos 2073 TiO$_2$ particulate | 1.5571g |
|---|---|
| Ken-React NZ 12 | 0.0366g |
| MEK peroxide | |

Polyester was added to the W, and TiO2 particulate. Acetone was added to aid in the dispersion of the NZ 12. After the blend started to show signs of color development i.e. TiO$_2$ dispersion more acetone was added and then the MEK peroxide. This material was compression molded into a slip sinker.

**Example 4 of Article Production**

Containing: Polyester, Technon Powder, Kronos 2073 TiO2, and Ken-React NZ 12.

| Formulation by weight: | |
|---|---|
| Polyester 3M | 1.6000g |
| Techon PLUS particulate | 36.3522g |
| Kronos 2073 TiO2 particulate | 4.8480g |
| Ken-React NZ 12 | 0.0400g |
| MEK peroxide | |

Polyester was added to the W, and TiO$_2$ particulate. Acetone was added to aid in the dispersion of the NZ 12. After the blend started to show signs of color development i.e. TiO$_2$ dispersion more acetone was added and then the MEK peroxide. This material was compression molded into the No. 1 slip sinker.

**Example 5 of Article Production**

Containing: Fluoroelastomer, Technon Powder, and Ken-React NZ 12.

| Formulation by weight: | |
|---|---|
| Fluoroelastomer THV220A Dyneon | 1.6535g |
| Techon PLUS particulate | 36.8909g |
| Ken-React NZ 12 | 0.0400g |

The NZ 12 was blended into the W particulate with the aid of acetone. The THV220A was dissolved in acetone to 38 wt.-% and then added to the W slurry. This blend was stirred till dry and then compression molded in a 1.25 inch metallurgical press. This large pellet was diced and oven dried at 104°C to dryness then reformed in a metallurgical press at 5700 lb-in$^{-2}$ and 177°C. Density of this material was 11.7 gm-cm$^{-3}$.

In these examples, the Tungsten particulate is first treated with the interfacial modifier. This is done by dissolving the desired amount of the interfacial modifier in a 250 ml beaker containing 50 ml of solvent (usually Isopropyl, or some other, alcohol) and then adding 100 grams of Tungsten particulate into the beaker. The resulting slurry is then mixed thoroughly on a steam bath until the mixture can no longer be stirred and most of the solvent has been driven off. The beaker containing the tungsten particulate and interfacial modifier is then placed in a forced air oven for 30 minutes at 100°C. The treated tungsten is added to a 100 ml beaker containing solid solution of THV220A dissolved in acetone. The mixture is then heated to 30°C and continuously stirred until most of the acetone has evaporated. The composite is then placed in a forced air oven for 30 minutes at 100°C. After drying, the composite is pressed in a 3.17 cm cylinder in a metallurgical die at 200°C and 4.5 metric tons ram force. After 5 minutes, the die is allowed to cool under pressure to 50°C. After releasing the pressure, the composite sample is removed from the die and the physical properties are measured. See Table _ for compositions and properties measured. THV220A is a copolymer of tetra- fluoroethylene, hexafluoropropylene, and vinylidene fluoride. NZ 12 is neopentyl (diallyl)oxy-tri(dioctyl)phosphato-zirconate. SIA0591.0 is N-(2-aminoethyl)-3-amonopropyl-trimethoxy-silane. KR 238J is a methacrylamid modified amine adduct available from Kenrich petrochemicals, Bayonne, NJ. LICA 09 is neopentyl(diallyl)- oxy tri(dodecyl)benzene-sulfonyl-titanate.

**Detailed Discussion of the Drawings**

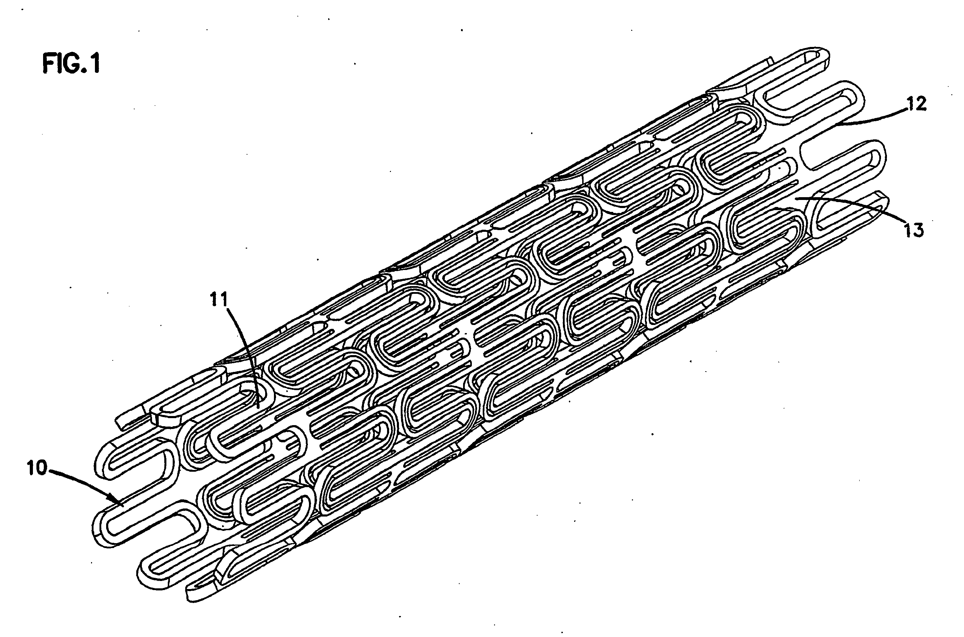

Figure 1 shows an isometric view of a stent comprising a metal polymer composite of the invention. The stent can be carved with known mechanical or laser methods from a molded tube of the composite or the stent can be directly molded onto the form shown. The stent 10 can comprise the composite and have flexible members 11 that permit expansion upon placement in a vascular lumen. The stent has curved members 13 and linear members 12 that can be formed from the composite by direct molding techniques or by carving the structures from a molded tube.

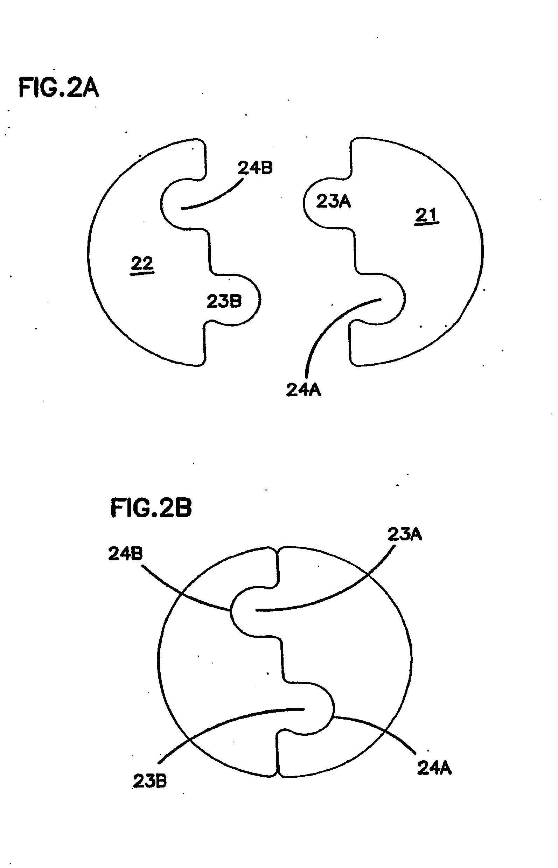

Figure 2A shows an extruded member having a symmetrical aspect. The extruded object 20 has a body 21 with an insert 23A and a symmetrical recess 24A. Such a structure 20 can be extruded and cut to length and then each length can be mated with a symmetrical member such that insert 23A can be inserted into recess 24B simultaneously with the insertion of insert 23B into recess 24A to interlock body 21 with body 22 to form a fixed mechanically stable assembly. That assembly is shown in Figure 2B. In Figure 2A, an object is formed which is substantially entirely filled throughout the combined body.

Figure 3 shows two jigs 30 and 31. The jigs comprise a hook 32, 33. On the hook is placed a sinker 34, 35. The sinker 34 is a molded sinker formed by compression molding on the hook 33. The sinker 35 is a press fit sinker similar to the extrudate of Fig 2 including inserts and recesses for the snap fit structure.

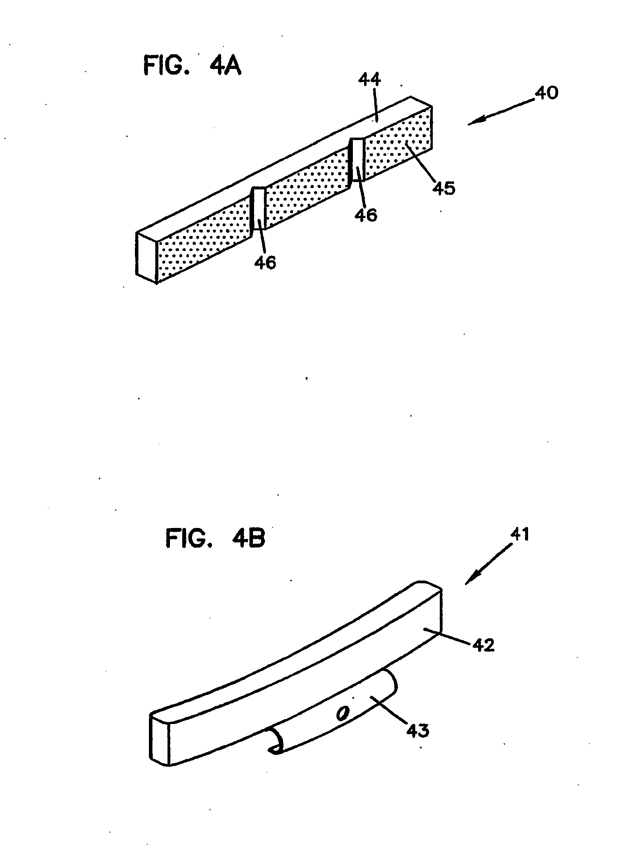

Figure 4 shows two wheel weight configurations of the invention. In Figure 4A, a wheel weight 40 includes a shaped mass 44 of the invention, having a adhesive strip 45 that can adhere the weight to the wheel. The weight can be extruded in a continuous sheet and cut into the mass 44 with the bending zones 46 formed in the weight 44 before cutting. The composite material is flexible and can be bent to conform to the wheel shape. Figure 4B shows a weight 41 having a composite mass 42 and a mechanical clip 43 configured for attachment to a transportation vehicle wheel.

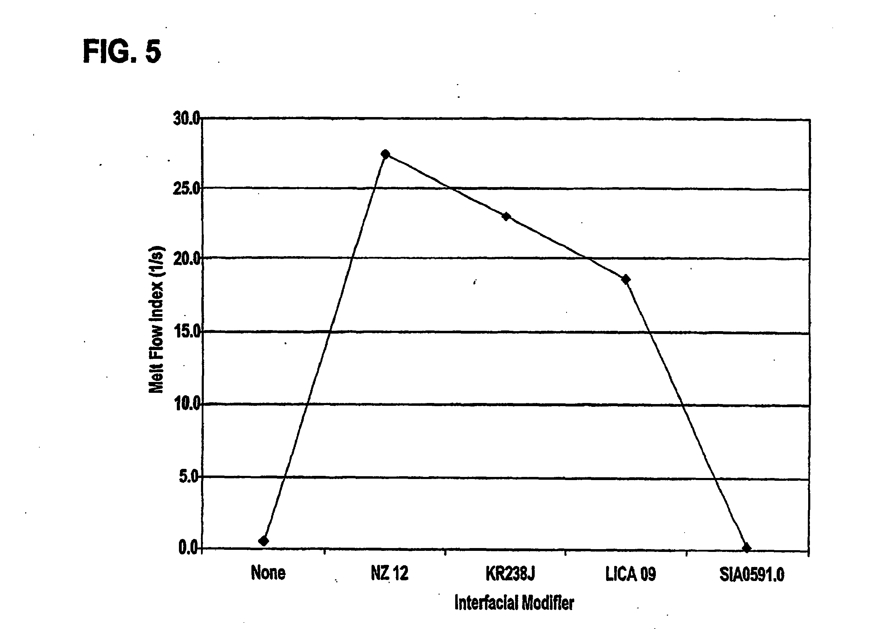

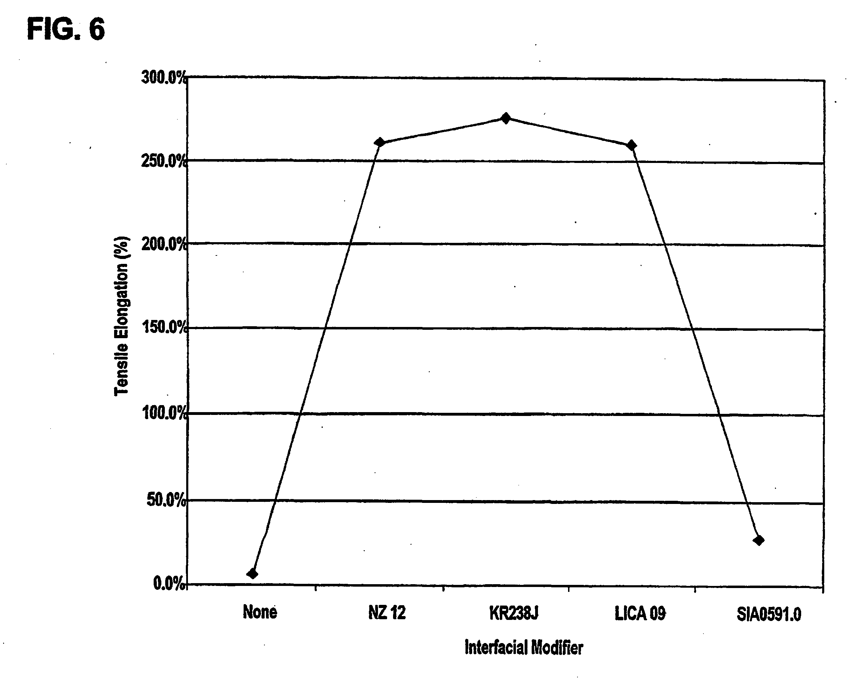

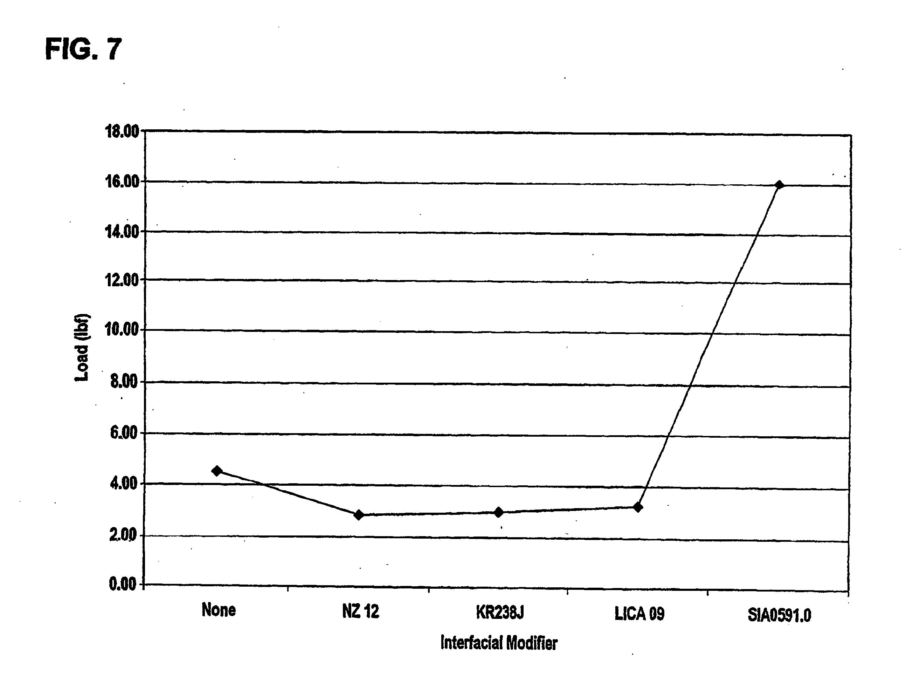

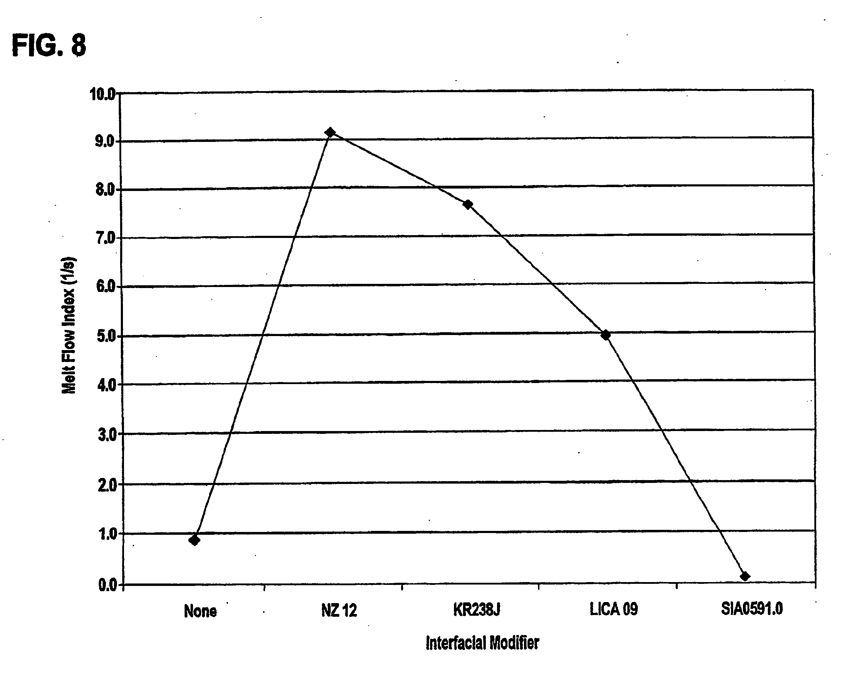

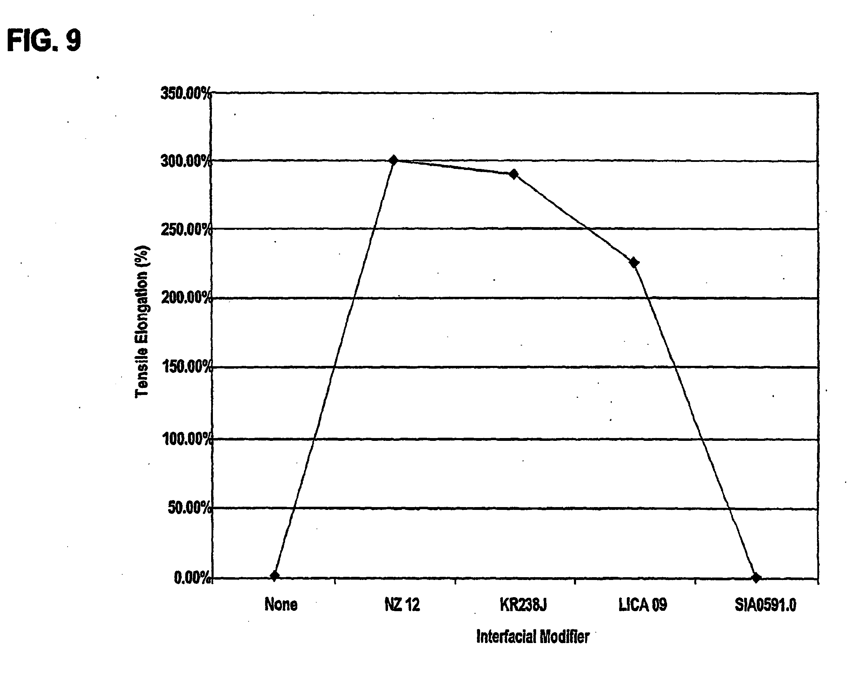

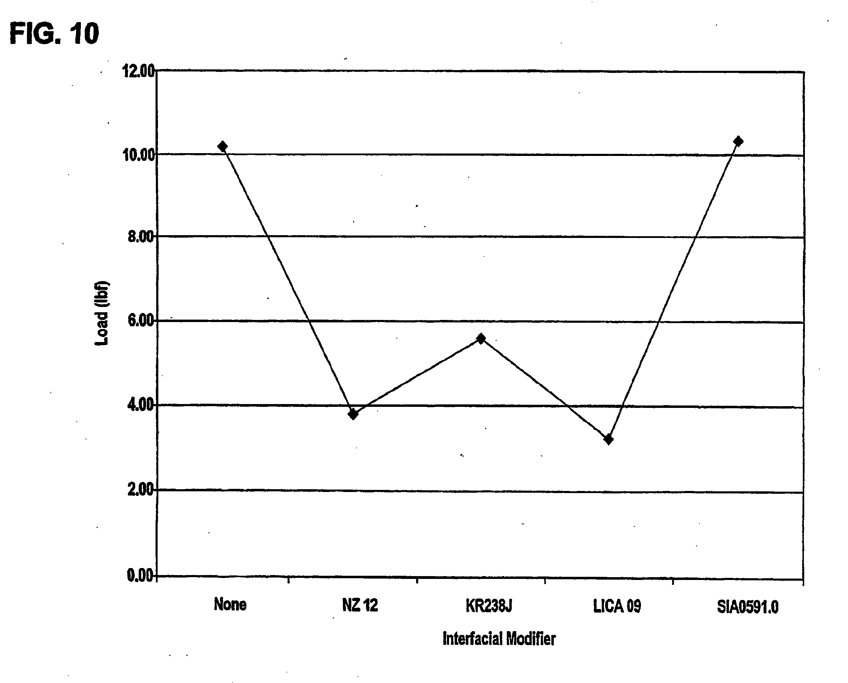

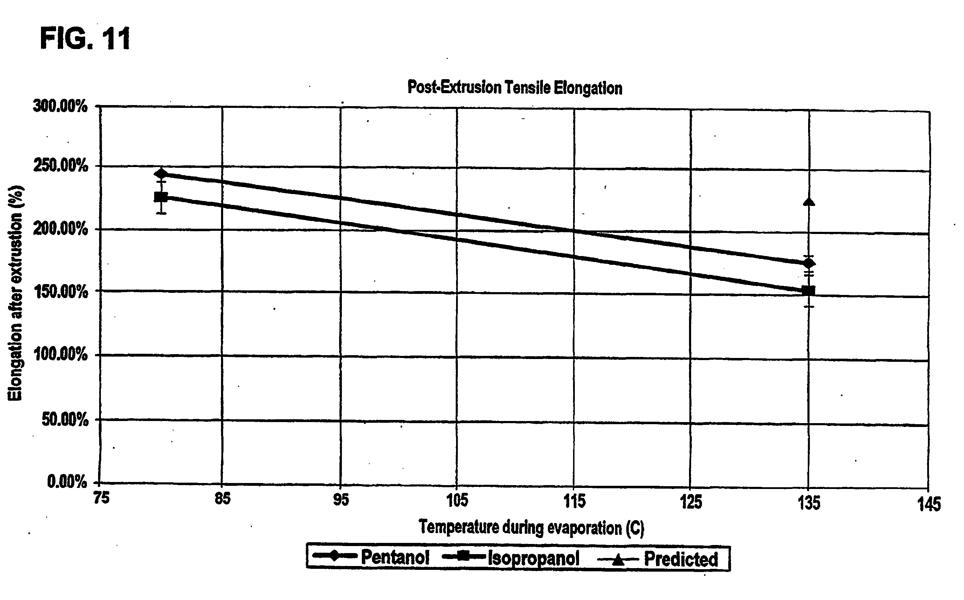

Figures 5-11 show data demonstrating the viscoelastic properties of the examples shown above and the adaptability of the technology to form desired properties in the materials.

The novel metal polymer composites of the invention can be used as a sound transmission dampening structure, sound insulation or isolation structure. Such structures can be in the form of insulating panels or sound absorbing structures comprising sound wedges, sound insulating wedges, sound absorbing wedges, sound insulating cones, sound absorbing cones or other insulating or absorbing sound projections that can be installed on a surface to interact with, absorb or dissipate sound.

The compositions of the invention can be used for internal combustion engine gaskets or seals. Such materials can be used in diesel, gasoline, rotary or wankel engines, turbine engines, turbojet engines, high bypass turbo fan engines or any other engine that derives energy through the combustion of a combustible fuel in order to generate energy. Such seals have viscoelastic properties that provide excellent sealing or gasketing properties while providing sound deadening characteristics. In particular, the compositions of the invention can be used in apex seals for rotary or wankel engines where the rotary or rotating structure with the engine contacts the walls of the engine housing.

The compositions of the invention have viscoelastic properties that can act to absorb or prevent the transmission of low or high frequency vibration through a structure. Where two structural members are combined in a structure, the material of the invention can be installed and prevent the transmission of vibrational energy, regardless of frequency, to propagate through the structure.

The compositions of the invention can be combined with a foamed thermoplastic material to provide a bi-, tri-, etc. layer structure that can have useful properties for a variety of installation purposes. In one layer is a foamed polymer layer and in the second layer, the composition of the invention. Such tape materials are, due to their viscoelastic properties, in particular, modulus, conformable to simple curves or complex surfaces and can easily adhere to such surfaces with strong adhesive bonding characteristics due to the close conformance of the flexible material to the surface. The material of the invention can be used in a variety of hand tool applications. In one application, the compositions of the invention can be formed by compression molding or injection molding into a hammer or mallet structure having substantial mass, but due to its viscoelastic properties, can deliver a force to a surface without harm that would arise from a hard surface. The softer viscoelastic nature of the material would result in the ability to deliver an impact force with little or no surface damage.

The compositions of the invention are ideal for use in fly wheel or pendulum weight applications. Such structures are easily formed by injection or compression molding and can have reduced size and more efficient operation due to the reduced requirements for large dimensional structures.

The viscoelastic and thermal properties of the invention make the compositions ideal for use in frictional surfaces that can absorb breaking energy and dissipate the resulting thermal load with efficiency. The compositions of the invention can be installed on a friction bearing surface such as a brake shoe. The brake shoe or caliper in a brake drum or disk brake application can come into contact with the brake drum or disk to absorb breaking energy, dissipate the thermal load and provide a high degree of directional control to the driver. The material of the invention should provide long term wear and excellent thermal management in high demand applications.

The compositions of the invention can be used in the form of an O-ring typically used to seal or mechanically buffer the interface between two surfaces in a variety of applications. O-rings typically have a toroidal shape overall, wherein the toroid can have a cross sectional shape of a circle, oval, ellipse, square, triangle or other geometric profile. The overall dimension of the diameter of the toroid can arrange from about 1 millimeter to 1 meter and the maximum dimension of the cross sectional shape can range from about 0.5 millimeter to about 50 centimeters. Such a shape in the form of a bushing, a toroid having a substantially rectangular cross section can be used as a noiseless or low fraction bushing. Such structures typically have the form of a coplanar toroidal shape having a center aperture that ranges from about 1 millimeter to about 10 centimeters with an overall circular diameter from about 5 millimeters to about 1 meter. The thickness of such bushings can range from about 1 millimeter to about 10 centimeters and can be used to buffer the interaction between two substantially planar surfaces.

Since the composite of the invention can have controlled conductivity due to the presence of substantial proportions of metallic particulate throughout the composite, a material can be made with a semiconductor like conductivity. Such semiconductor resistivities tend to range from about 1 to $10^2$ ohm meters. Such resistivities are generally somewhere between a true insulator having a resistivity of as much as $10^{12}$ ohm meters and is substantially greater than copper that has a resistivity of about $1.7 \times 10^{-8}$ ohm meter resistivity. Such semiconductor materials can be doped to form N type and P type semiconductors by doping the semiconductor of appropriate resistivity with materials that, in the composite, can provide an additional free electron to form an N type semiconductor or by the introduction of a dopant that results in an deficiency of valence electrons, i.e., a hole in the semiconductor composite. For the composites of the invention, traditional compounds such as phosphorus-doped silicon can provide N type semiconductor properties while traditional compounds such as gallium-doped silicon can provide P type semiconductor properties. In addition, dissimilar metals and compounds can be used to create n type semiconductor properties and p type semiconductor properties which can then be layered to create junctions, such as pn and np, in order to create semiconductor combinations. The composites of the invention can be used as heavy or dense structures similar to those in use including such applications as fishing lines and nets, anchors, sinkers, diving belt weights, bow hunting counterweights, race car weight or ballast materials, dense be bees for tape or post-it note applications, cell phone vibrating weights, weights or dumbbells used in exercise, competitive lifting or power lifting, weighted insoles for training, wearable weights in the form of insertable weights or jackets made of the compositions of the invention, weights used for horse racing parity or other applications of the material solely for its property as a heavy material.

In a dynamic application, the weights of the invention can be used as a component in a sporting implement. For example, in golf, the composition of the invention can be used as a golf ball core, can be used as a weighted portion of a golf club to modify the striking force of the club head. In such an application, the weight of the invention would be installed in the club head at different locations, for example, in the hollow driver head, to change the striking characteristics of the club. The compositions of the invention could be added to a tennis racket, baseball bat, hockey stick, or other striking implement to either increase the force of the striking implement or to direct the force to a particular vector or direction.

The compositions of the invention can be used in the installation of building ballast used to stabilize tall buildings under the load of natural forces derived from wind load, earthquake force load, ordinary building vibration, etc. Such ballasts are often installed in large installations, either in the building top or within the building structure and are placed such that the mass of the ballast can absorb the force or counteract the force of an earthquake force load or a wind load variation. Such ballasts are placed at the top, or near the top of many buildings to damp the extremes of motion caused by imposition of earthquake loads or wind loads on the structure. The viscoelastic properties of the compositions make the compositions ideal for use as a law enforcement striking tool including a billy club, night stick or other structure.

The wheel weights of the invention can be a linear extrudate with a regular cross section and an arbitrary length to achieve appropriate weight. The wheel weight can be coextruded with a dispersed colorant or exterior decorative or informational capstock layer. The mass of the weights can range form 1 to 250 grams and 2 to 100 grams. The cross section is rectangular to enhance the area of adhesion to the wheel with the larger dimension of the rectangle profile against the wheel. The rectangle profile larger dimension can be I mm to 5 cm and the smaller dimension can be 1mm to 3 cm. The wheel weight can be attached with adhesive means including an adhesive layer, an adhesive tape or a separate addition of adhesive. A release liner can protect the adhesive surface of the adhesive or of the adhesive tape. The viscoelastic properties of the composition make the wheel weights ideal for adhesive attachment to a wheel.

While the above specification shows an enabling disclosure of the composite technology of the invention, other embodiments of the invention may be made without departing from the spirit and scope of the invention. Accordingly, the invention is embodied in the claims hereinafter appended.

## Claims

1. A weighted structure having increased density per unit size comprising a metal and polymer viscoelastic composite comprising:

(a) a metal particulate, the particulate having a particle size distribution wherein no more than 5 wt% of the metal particulate has a diameter less than 10 microns, at least 10wt% of the particulate has a diameter falling in the range 10 to 100 microns, at least 10wt% of the particulate has a diameter falling in the range 100 to 250 microns and at least 10wt% of the particulate has a diameter falling in the range 100 to 500 microns, the particulate being provided with an exterior coating of interfacial modifier and having a circularity of greater than 13; and

(b) a polymer phase;

wherein the viscoelastic composite has a tensile elongation of about at least 5%.

2. The weighted structure of claim 1 which is a weight for a fishing sinker line, an equestrian weight, a collection of spherical weights used as ballast, an archery bow counterweight, a golf ball or a golf club part, a cell phone vibrator, a fishing sinker in combination with a swivel, a diving belt weight, a Maritime anchor, a ballast in an automobile, a race car weight, weighted insoles for training, wearable weights in the form of insertable weights or jackets made of the compositions; weights used for horse racing; a component in a sporting implement such as a tennis racket, baseball bat, hockey stick, or other striking implement to either increase the force of the striking implement or to direct the force to a particular vector or direction.

3. The weighted structure of claim 1 which is a sound transmission dampening structure, sound insulation or isolation structure to absorb or prevent the transmission of low or high frequency through a structure.

4. The weighted structure of claim 1 which is an internal combustion engine gasket or seal.

5. The weighted structure of claim 1 which is a fly wheel or pendulum weight.

6. The weighted structure of claim 1 which provides a frictional surfaces that can absorb breaking energy and dissipate the resulting thermal load with efficiency.

7. The weighted structure of claim 1 which is an O-ring.

8. The weighted structure of claim 1 which has semiconductor like conductivity.

9. The weighted structure of claim 1 which is a dispenser for tape or post-it note applications.

10. The weighted structure of claim 1 which is which is building ballast used to stabilize tall buildings under the load of natural forces derived from wind load, earthquake force load, or ordinary building vibration.

11. The weighted structure of claim 1 which is a wheel weight for an automobile, coextruded with a dispersed colorant or exterior decorative or informational capstock layer.

12. The weighted structure according to claim 1 which is magnetic.

13. A method of manufacturing a weighted structure according to any one of the preceding claims comprising forming a metal and polymer viscoelastic composite as defined in claim 1, wherein forming the metal and polymer viscoelastic composite comprises: (i) reacting interfacial modifier with metal particulate;

(ii) combining the product of step (i) with polymer to form the composite material; and
(iii) forming the composite material into a desired shape.

14. The weighted structure of claim 1 or claim 11 which is a wheel weight wherein the structure is a linear extrudate with a regular cross section and an arbitrary length.

15. The weighted structure of any one of claims 1, 11 and 14, which is a wheel weight having a weight of 1 to 250 grams.

16. The weighted structure of claim 15 which is a wheel weight having a weight of 2 to 100 grams.

17. The weighted structure of claim 1, of claim 11, or of any of one claims 14 to 16 which is a wheel weight having a cross section wherein the cross section has a rectangular profile having a larger dimension and a smaller dimension.

18. The weighted structure of claim 17 wherein the larger dimension of the rectangular profile is 1 mm to 5 cm and the smaller dimension of the rectangular profile is 1 mm to 3 cm.

19. The weighted structure of claim 1, of claim 11, or of any one of claims 14 to 18 which is a wheel weight further comprising an adhesive layer or an adhesive tape.


**Patentansprüche**

1. Gewichtsstruktur mit erhöhter Dichte pro Einheitsgröße, die einen viskoelastischen Metall-Polymer-Verbundstoff umfasst, der Folgendes umfasst:

   (a) Metallteilchen, wobei die Teilchen eine Teilchengrößenverteilung aufweisen, bei der nicht mehr als 5 Gew.-% der Metallteilchen einen Durchmesser unter 10 $\mu$m aufweisen, zumindest 10 Gew.-% der Teilchen eine Durchmesser im Bereich von 10 bis 100 $\mu$m aufweisen, zumindest 10 Gew.-% der Teilchen einen Durchmesser im Bereich von 100 bis 250 $\mu$m aufweisen und zumindest 10 Gew.-% der Teilchen einen Durchmesser im Bereich von 100 bis 500 $\mu$m aufweisen, wobei die Teilchen mit einer Außenbeschichtung aus einem Grenzflächenmodifikator versehen sind und eine Rundheit von mehr als 13 aufweisen; und
   (b) eine Polymerphase;

   wobei der viskoelastische Verbundstoff eine Zugdehnung von etwa zumindest 5 % aufweist.

2. Gewichtstruktur nach Anspruch 1, bei der es sich um ein Gewicht für eine Angelsinkleine, ein Reitergewicht, eine Gruppe von kugelförmigen Gewichten als Ballast, ein Stabilisatorgewicht für den Bogensport, einen Golfball oder einen Golfschlägerteil, eine Mobiltelefonvibrationsvorrichtung, eine Angel-Sinkgewicht in Kombination mit einem Drehzapfen, ein Tauchgewicht, einen Bootsanker, einen Ballast in einem Kraftfahrzeug, ein Rennautogewicht, Gewichtseinlagen für Trainingszwecke, tragbare Gewichte in Form von einführbaren Gewichten oder Jacken aus den Zusammensetzungen; Gewichte für Pferderennen; einen Bestandteil einer Sportausrüstung, wie z.B. eines Tennisschlägers, Baseball-Schlägers, Hockey-Schlägers oder einer anderen Schlägerimplementierung, um entweder die Kraft der Schlägerimplementierung zu erhöhen oder die Kraft auf einen bestimmten Vektor oder eine bestimmte Richtung auszurichten, handelt.

3. Gewichtsstruktur nach Anspruch 1, bei der es sich um eine die Schallübertragung dämpfende Struktur, Schallisolation oder Isolationsstruktur zur Absorption oder Verhinderung der Übertragung von niedriger oder hoher Frequenz durch eine Struktur handelt.

4. Gewichtsstruktur nach Anspruch 1, bei der es sich um eine Verbrennungsmotordichtung handelt.

5. Gewichtsstruktur nach Anspruch 1, bei der es sich um ein Schwungrad oder ein Pendelgewicht handelt.

6. Gewichtsstruktur nach Anspruch 1, die Reibungsflächen bereitstellt, die Bremsenergie absorbieren können und die resultierende Wärmebeladung effizient abführen können.

7. Gewichtsstruktur nach Anspruch 1, die ein O-Ring ist.

8. Gewichtsstruktur nach Anspruch 1, die halbleiterähnliche Leitfähigkeit aufweist.

9. Gewichtsstruktur nach Anspruch 1, bei der es sich um einen Spender für Klebeband oder Haftnotizanwendungen handelt.

10. Gewichtsstruktur nach Anspruch 1, bei der es sich um Bauballast handelt, der verwendet wird, um hohe Gebäude unter Belastung durch natürliche Kräfte, die aus Windbelastung, Erdbebenbelastung oder herkömmlicher Gebäudevibration resultiert, zu stabilisieren.

11. Gewichtsstruktur nach Anspruch 1, bei der es sich um ein Reifengewicht für ein Kraftfahrzeug handelt, das gemeinsam mit einem dispergierten Farbstoff oder einer dekorativen oder informationellen Außendeckschicht extrudiert wird.

**12.** Gewichtsstruktur nach Anspruch 1, die magnetisch ist.

**13.** Verfahren zur Herstellung einer Gewichtsstruktur nach einem der vorangegangenen Ansprüche, welches das Ausbilden eines viskoelastischen Metall-Polymer-Verbundstoffs nach Anspruch 1 umfasst, wobei das Ausbilden des viskoelastischen Metall-Polymer-Verbundstoffs Folgendes umfasst:

(i) Umsetzen eines Grenzflächenmodifikators mit Metallteilchen;
(ii) Vereinigen des Produkts aus Schritt (i) mit einem Polymer, um das Verbundmaterial zu bilden; und
(iii) Formen des Verbundmaterials in eine gewünschte Form.

**14.** Gewichtsstruktur nach Anspruch 1 oder Anspruch 11, bei der es sich um ein Reifengewicht handelt, wobei die Struktur ein lineares Extrudat mit einem regelmäßigen Querschnitt und einer beliebigen Länge ist.

**15.** Gewichtsstruktur nach Anspruch 1, 11 und 14, bei der es sich um ein Reifengewicht mit einem Gewicht von 1 bis 250 g handelt.

**16.** Gewichtsstruktur nach Anspruch 15, bei der es sich um ein Reifengewicht mit einem Gewicht von 2 bis 100 g handelt.

**17.** Gewichtsstruktur nach Anspruch 1, Anspruch 11 oder einem der Ansprüche 14 bis 16, bei der es sich um ein Reifengewicht mit einem Querschnitt handelt, wobei der Querschnitt ein rechteckiges Profil mit einer größeren Abmessung und einer kleineren Abmessung aufweist.

**18.** Gewichtsstruktur nach Anspruch 17, wobei die größere Abmessung des rechteckigen Profils 1 mm bis 5 cm beträgt und die kleinere Abmessung des rechteckigen Profils 1 mm bis 3 cm beträgt.

**19.** Gewichtsstruktur nach Anspruch 1, Anspruch 11 oder einem der Ansprüche 14 bis 18, bei der es sich um ein Reifengewicht handelt, das weiters eine Klebeschicht oder ein Klebeband umfasst.

## Revendications

**1.** Structure lestée ayant une masse volumique par unité de taille augmentée comprenant un composite viscoélastique de métal et de polymère comprenant :

(a) des particules de métal, les particules ayant une granulométrie dans laquelle pas plus de 5 % en poids des particules de métal ont un diamètre inférieur à 10 microns, au moins 10 % en poids des particules ont un diamètre situé dans la plage de 10 à 100 microns, au moins 10 % en poids des particules ont un diamètre situé dans la plage de 100 à 250 microns et au moins 10 % en poids des particules ont un diamètre situé dans la plage de 100 à 500 microns, la particule étant pourvue d'un revêtement extérieur de modificateur interfacial et ayant une circularité supérieure à 13 ; et
(b) une phase de polymère ;

dans laquelle le composite viscoélastique a un allongement à la traction d'environ au moins 5 %.

**2.** Structure lestée de la revendication 1 qui est un poids pour une ligne de lest de pêche, un poids équestre, une collection de poids sphériques utilisés en tant que ballast, un contrepoids de tir à l'arc, une balle de golf ou une partie d'un club de golf, un vibreur de téléphone cellulaire, un lest de pêche en combinaison avec un émerillon, un poids de ceinture de plongée, une ancre maritime, un ballast dans une automobile, un poids de voiture de course, des semelles intérieures lestées pour l'entraînement, des poids à porter sous la forme de poids insérables ou de vestes constituées des compositions ; des poids utilisés pour les courses hippiques ; un composant dans un dispositif sportif tel qu'une raquette de tennis, une batte de baseball, un bâton de hockey, ou un autre dispositif de frappe pour augmenter la force du dispositif de frappe ou pour diriger la force vers un vecteur ou une direction particuliers.

**3.** Structure lestée de la revendication 1 qui est une structure d'amortissement de transmission sonore, une structure d'isolation sonore pour absorber ou empêcher la transmission de fréquences basses ou hautes à travers une structure.

**4.** Structure lestée de la revendication 1 qui est une garniture ou un joint de moteur à combustion interne.

**5.** Structure lestée de la revendication 1 qui est un poids de plateau d'embrayage ou de pendule.

**6.** Structure lestée de la revendication 1 qui comprend une surface de frottement qui peut absorber une énergie de rupture et dissiper la charge thermique résultante efficacement.

**7.** Structure lestée de la revendication 1 qui est un joint torique.

**8.** Structure lestée de la revendication 1 qui a une conductivité de type semi-conducteur.

**9.** Structure lestée de la revendication 1 qui est un distributeur pour des applications de bande adhésive ou de languette adhésive.

**10.** Structure lestée de la revendication 1 qui est qui est un ballast de construction utilisé pour stabiliser des bâtiments hauts sous la charge de forces naturelles dérivées d'une charge éolienne, d'une charge de force sismique, ou des vibrations usuelles d'un bâtiment.

**11.** Structure lestée de la revendication 1 qui est une masse d'équilibrage pour une automobile, coextrudée avec un colorant dispersé ou une couche de capstock décorative ou informative extérieure.

**12.** Structure lestée selon la revendication 1 qui est magnétique.

**13.** Procédé de fabrication d'une structure lestée selon l'une quelconque des revendications précédentes comprenant la formation d'un composite viscoélastique de métal et de polymère tel que défini dans la revendication 1, dans lequel la formation du composite viscoélastique de métal et de polymère comprend :

(i) la réaction d'un modificateur interfacial avec des particules de métal ;
(ii) la combinaison du produit de l'étape (i) avec un polymère pour former le matériau composite ; et
(iii) la formation du matériau composite en une forme souhaitée.

**14.** Structure lestée de la revendication 1 ou la revendication 11 qui est une masse d'équilibrage, la structure étant un extrudat linéaire avec une section transversale régulière et une longueur arbitraire.

**15.** Structure lestée de l'une quelconque des revendications 1, 11 et 14, qui est une masse d'équilibrage ayant un poids de 1 à 250 grammes.

**16.** Structure lestée de la revendication 15 qui est une masse d'équilibrage ayant un poids de 2 à 100 grammes.

**17.** Structure lestée de la revendication 1, de la revendication 11, ou de l'une quelconque des revendications 14 à 16 qui est une masse d'équilibrage ayant une section transversale, la section transversale ayant un profil rectangulaire ayant une grande dimension et une petite dimension.

**18.** Structure lestée de la revendication 17 dans laquelle la grande dimension du profil rectangulaire est de 1 mm à 5 cm et la petite dimension du profil rectangulaire est de 1 mm à 3 cm.

**19.** Structure lestée de la revendication 1, de la revendication 11, ou de l'une quelconque des revendications 14 à 18 qui est une masse d'équilibrage comprenant en outre une couche adhésive ou une bande adhésive.

FIG.1

## FIG.2A

24B

23A

21

22

23B

24A

## FIG.2B

24B

23A

23B

24A

## FIG. 3A

## FIG. 3B

## FIG. 4A

## FIG. 4B

FIG. 5

FIG. 6

**FIG. 7**

EP 1 987 089 B1

FIG. 8

**FIG. 9**

# FIG. 10

EP 1 987 089 B1

# FIG. 11

Post-Extrusion Tensile Elongation

Elongation after extrusion (%)

Temperature during evaporation (C)

◆ Pentanol   ■ Isopropanol   ▲ Predicted

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3895143 A
- US 2748099 A, Bruner
- US 5548125 A, Sandbank
- US 5237930 A, Belanger
- JP 63273664 A
- US 6048379 A, Bray
- US 6517774 B
- US 2852364 A, Spedding
- US 4569978 A, Barber
- GB 827308 A

- US 3178399 A
- US 2968649 A
- US 4257699 A, Lentz
- US 5017432 A, Eddy
- US 5061965 A, Ferguson
- US 4418186 A
- US 5214106 A
- US 5639838 A
- US 5696216 A
- US 0103195 A

**Non-patent literature cited in the description**

- Tungsten. **K. C. LI ; C. Y. WANG.** A.C.S. Monograph Series no. 94. Reinhold, 1955, 113-269
- **G. D. RIECK.** Tungsten and Its Compound. Pergamon Press, 1967, 154
- *Reviews: Parish, Advan. Inorg. Chem. Radiochem.,* 1966, vol. 9, 315-354
- Chromium, Molybdenum and Tungsten. **ROLLINSON et al.** Comprehensive Inorganic Chemistry. Pergamon Press, 1973, vol. 3, 623-624, 742-769
- **M.H. KLAPROTH.** *Chem. Ann.,* vol. II, 387
- **E. PELIGOT.** *C.R. Acad. Sci,* vol. 12, 735
- **IDEM.** *Ann. Chim. Phys.,* vol. 5,5
- *Chem. Eng.,* 1955, vol. 62, 113
- *Reviews: Mellor's,* 1932, vol. XII, 1-138
- **C.D. HARRINGTON ; A.R. RUEHLE.** Uranium Production Technology. Van Nostrand, Princeton, 1959
- **E.H.P. CORDFUNKE.** The Chemistry of Uranium. Elsevier, 1969, 2550
- *Handb. Exp. Pharmakol,* 1973, vol. 36, 3-306
- The Actinides. Comprehensive Inorganic Chemistry. Pergamon Press, 1973, vol. 5
- **F. WEIGEL.** Kirk.Othmer Encyclopedia of Chemical Technology. Wiley-Interscience, 1983, vol. 23, 205-547
- The Chemistry of the Actinide Elements. Chapman an Hall, vol. 1, 169-442
- **J.C. SPIRLET et al.** *Adv.Inorg. Chem.,* 1987, vol. 31, 1-40
- *Toxicological Profile for Uranium,* 1990, 205
- **MELLOR.** *A Comprehensive Treatise on Inorganic and Theoretical Chemistry,* 1936, vol. 15, 6887
- **GILCHRIST.** *Chem. Rev,* 1943, vol. 32, 277-372

- **BEAMISH et al.** Rare Metals Handbook. Reinhold, 1956, 291-328
- **GRIFFITH.** *Quart. Rev.,* 1965, vol. 19, 254-273
- The Chemistry of the Rarer Platinum Metals. John Wiley, 1967, 1-125
- **LIVINGSTONE et al.** Comprehensive Inorganic Chemistry. Pergamon Press, 1973, vol. 3, 1163-1189, 1209-1233
- **DEVILLE, DEBRAY.** *Ann. Chim. Phys.,* vol. 61, 84
- **WICHERS.** *J. Res. Nat. Bur. Stand.,* 1933, vol. 10, 819
- **GILCHRIST.** *Chem. Rev.,* 1943, vol. 32, 277-372
- **W.P. GRIFFITH.** the Chemistry of the Rare Platinum Metals. John Wiley, 1967, 1-41, 227-312
- **LIVINGSTONE et al.** Comprehensive Inorganic Chemistry. Pergamon Press, vol. 3, 1163-1189, 1254-1274
- **WICHERS et al.** *Trans. Amer. Inst. Min. Met. Eng.,* 1928, vol. 76, 602
- **LIVINGSTONE et al.** Comprehensive Inorganic chemistty. Pergamon press, 1973, vol. 3, 1163-1189, 1330-1370
- **F.R. HARLEY.** The Chemistry of Platinum and Palladium with Particular Reference to Complexes of the Elements. Halsted Press, 1973
- **ROESER et al.** *Nat Bur. Stand. J. Res.,* 1931, vol. 6, 1119
- **ROESER et al.** *Nat. Bur. Stand. J. Res.,* 1931, vol. 6, 1119
- **HULL, STENT.** Modern Chemical Processes. Reinhold, 1958, vol. 5, 60-71
- **BLOCK.** *Inorg. Syn,* 1953, vol. 4, 15

- **D.H. BROWN ; W.E. SMITH.** *Chef. Soc. Rev.,* 1980, vol. 9, 217
- **R.E. SIEVERS ; S.A. NYARADY.** *J. Am. Chem. Soc.,* 1985, vol. 107, 3726
- **B. HAMMER ; J.K. NORSKOV.** *Nature,* 1995, vol. 373, 238
- Reviews: Gmelin's Handb. Anorg. Chem., Gold. 1954, vol. 62
- Gold. **JOHNSON, DAVIS et al.** Comprehemsive Inorganic Chemistry. Pergamon Press, 1973, vol. 3, 129-186
- **J.G. COHN ; E.W. STEM.** Kirk-Othmer Encyclopedia of Chemical Technology. Wiley Interscience, 1980, vol. 11, 972-995
- **NODACK et al.** *Naturwiss,* 1925, vol. 13, 567, , 571
- **HURD, BRIM.** *Inorg. Syn,* 1939, vol. 1, 175
- **ROSENBAUM et al.** *J. Electrochem. Soc.,* 1956, vol. 103, 18
- **MEALAVEN.** rare Metals Handbook. Reinhold, 1954, 347-364
- **PEACOCK et al.** Comprehensive Inorganic Chemistry. Pergamon Press, 1973, vol. 3, 905-978
- **P.M. TREICHEL.** Kirk-Othmer Encyclopedia of Chemical Technology. Wiley-Interscience, 1982, vol. 20, 249-258
- **E. MCMILLAN ; P. ABELSON.** *Phys. Rev.,* 1940, vol. 57, 1185
- **S. FRIED ; N. DAVIDSON.** *J. Am. Chem. Soc.,* 1948, vol. 70, 3539
- **L.B. MAGNUSSON ; TJ. LACHAPELLE.** *J. AM. CHEM. SOC.,* 3534
- **C. KELLER.** the chemistry of the Transactinide Elements. Verlag Chemie, 1971, 253-332
- **W.W. SCHULZ ; G.E. BENEDICT.** Neptunium-237; Production and Recovery. *AEC Critical Review Series,* 1972, 85
- Comprehensive Inorganic Chemistry. Pergamon Press, 1973, vol. 5
- **J.A. FAHEY et al.** The Chemistry of the Actinide Elements. Chapman and Hall, 1986, vol. 1, 443-498
- **G.T. SEABORG.** Kirk-Othmer Encyclopedia of Chemical Technology. Wiley-Interscience, 1991, vol. 1, 412-444
- **G.T. SEABORG et al.** *Phys. Rev.,* 1946, vol. 366, 367
- **G.T. SABORG ; M.L. PERLMAN.** *J. Am. Chem. Soc.,* 1948, vol. 70, 1571
- **HARVEY et al.** *J. Chem. Soc.,* 1947, 1010
- **J.M. CLEVELAND.** the Chemistry of Plutonium. Gordon & Breach, 1970, 653
- **C. KELLER.** The Chemistry of the Transuranium Elements. Verlag Chemie, 1971, 333-484
- *Handb. Exp. Pharmakol,* 1973, vol. 36, 307-688
- **F. WEIGEL.** Kirk-Othmer Encyclopedia of Chemical Technology. Wiley-Interscience, 1982, vol. 18, 278-301
- Plutonium Chemistry. Am. Chem. Soc, 1983, 484
- **F. WEIGEL et al.** The Chemistry of the Actinide Elements. Chapman and Hall, 1986, vol. 1, 499-886
- **W.J. BAIR ; R.C. THOMPSON.** *Science,* 1974, vol. 183, 715-722
- *Toxicological Profile for Plutonium,* 1990, 206
- **BOLTON.** *Z. Elektrochem.,* 1905, vol. 11, 45
- **SCHOELLER, POWELL.** *J. Chem. Soc.,* 1921, vol. 119, 1927
- **G.L. MILLER.** Tantalum and Niobium. Academic Press, 1959, 767
- The Chemistry of Niobium and Tantalum. **BROWN et al.** Comprehensive Inorganic Chemistry. Pergamon Press, 1973, vol. 3, 553-622
- Modern Fluoropolymers. 1997, 71-101, 567-614